# EUROPEAN PATENT APPLICATION

(11) **EP 1 429 269 A2**
(43) Date of publication of application: **16.06.2004**
(21) Application number: 03078720.4
(22) Date of filing: 25.11.2003
(51) Int. Cl.: G06F 17/60

(54) **Disintermediated financial transaction system**

(30) Priority: 26.11.2002 JP 2002341739; 29.05.2003 US 449224
(71) Applicant: IP Strategic Incorporated, Tokyo 141-0001 (JP)
(72) Inventor: Nishimaki, Masonobu, Shinagawa-ku Tokyo 141-0001 (JP)
(74) Representative: van Westenbrugge, Andries

(57) **Abstract**

A computer system for supporting disintermediated financial transactions between end customers comprises at least one computer equipped to function as a web server and a database server, a plurality of user terminals of said end customers, at least one computer network connecting said computer and said user terminals, one or more financial instrument databases, and any one or more other databases selected from the group consisting of a contract management database, a settlement management database, a data distribution database and a client information database. Said system is arranged to enable at least one of an auction mode and a negotiation mode, the auction mode for directly matching financial transaction orders according to the principle of balance of supply and demand, and the negotiation mode for providing communication channels between said end customers so that the end customers can directly negotiate with one another to complete said financial transactions.

## Description

### BACKGROUND OF THE INVENTION

### 1. Field of the Invention

The present invention relates to a disintermediated financial transaction system to create one or more transaction markets of one or more financial instruments via at least one computer network and match demands of end customers.

### 2. Prior Art

In conventional financial transactions, conventional intermediaries such as banks and securities companies have existed between end customers being buyers and end customers being sellers. Thus, the end customers who perform transactions through these intermediaries have experienced decreased yields on investment or increased funding costs by the amounts of brokerage or intermediation fees directly or indirectly payable to the intermediaries.

Moreover, the banks and the securities companies, in addition to the brokerage or intermediation business, conduct proprietary transaction business. Structures of conflicts of interests between the end customers and the banks or securities companies, in which the conventional intermediaries, in order to gain larger transaction profits by the use of their proprietary funds, either cause the end customers to transact with themselves as counterparties under disadvantageous conditions, or complete their transactions by the use of the proprietary funds on a front-running basis on the assumption that the end customers would read the transaction reference or proposal data provided by them and then would conduct transactions, or in which the conventional intermediaries provide the reference or proposal data with the aim that the end customers would increase their frequency of transactions in financial instruments, have been conventionally recognized.

However, knowledge and information on financial transactions accumulated by the conventional intermediaries cannot be assimilated by the end customers in one day. Thus, a mechanism, which provides the knowledge and information held by the intermediaries for the end customers whilst solving the conflicts of interests between the intermediaries and the end customers, is required.

On the other hand, securities exchanges and financial derivatives exchanges tend to trade only popular names and popular products as their transaction objects. Thus, the trading of bonds with low liquidity and the transactions of complicated financial derivative products are centered on over-the-counter transactions with banks or securities companies as counterparties. Also, since the trading of instruments that are not transacted through exchanges is increasing even in liquid equities and the like, and thus the percentage of invisible over-the-counter transactions are increasing, the transparency of the markets important to end customers is being compromised. Existing securities exchanges and financial derivatives exchanges basically employ a mechanism in which end customers cannot participate in transactions unless they transact through banks or securities companies within their membership, and thus the end customers are once again being disadvantaged.

Various settlements and administrations arising from the completion of a transaction such as transaction confirmation, funds settlement and securities settlement and/or the like, through their historical circumstances, use different systems according to the type of financial instrument or the specific trading market, and thus it is hard to unite the systems. Also, since a high percentage of settlements and administrations are still processed manually, the systems are not appropriate for end customers who wish to transact various kinds of financial instruments. This is a result of the fact that banks, securities companies, exchanges, clearing houses, software houses, information vendors and the like have arbitrarily developed and provided each system for their own respective intentions.

WO 02/11000 A2 suggests a financial transaction system to create virtual markets of financial instruments via communication lines on computer networks and to match buying and selling demands of end customers. That document does disclose that financial transactions can be performed on the basis of matching of an auction mode via, e.g. the Internet while avoiding transactions through conventional intermediaries that may be expensive and superfluous. In the financial markets, however, more technical functionality is required than disclosed therein. That is, the auction mode may not always be sufficient as functionality.

Accordingly, it is an object of the present invention to design a flexible system that is user-friendly and capable of supporting financial transactions, whereby more technical functions are provided for people involved in the financial markets.

### SUMMARY OF THE INVENTION

To that end, the present invention provides a computer system for supporting disintermediated financial transactions between end customers selected from the group consisting of end capital managers, end capital raisers and end capital transactors, wherein the system comprises: (a) at least one computer equipped to function as a web server and a database server; (b) a plurality of user terminals of said end customers; (c) at least one computer network connecting said computer and said user terminals; (d) one or more financial instrument databases storing data regarding financial transactions selected from the group consisting of capital raising, capital management, secondary offerings and capital transactions; and (e) any one or more other databases selected from the group consisting of: (i) one or more contract management databases storing data regarding at least one of financial transaction agreements, prospectuses, reports and disclosures; (ii) one or more settlement management databases storing data regarding at least one of funds settlement and securities settlement; (iii) one or more data distribution databases storing at least one of capital management reference data, capital raising proposal data and capital transaction proposal data; and (iv) one or more client information databases storing data regarding users of said system, and the system is arranged to enable at least one of an auction mode and a negotiation mode, the auction mode for directly matching according to the principle of balance of supply and demand, financial transaction orders selected from the group consisting of capital raising orders, capital management orders, secondary offering orders and capital transaction orders, and the negotiation mode for providing communication channels between said end customers so that the end customers can directly negotiate with one another to complete said financial transactions.

By providing said end customers with the option to select the auction mode performed by the server or the negotiation mode in which they can directly negotiate with one another, the flexibility of the system is significantly enhanced.

Also, the disintermediated financial transaction system according to the first aspect of the present invention may be characterized in that said financial transaction is capital raising and the system further comprises: (a) transmission means by which a terminal of a prospective capital raiser sends said computer a capital raising order; (b) receiving means by which the computer receives the capital raising order sent from the terminal of the prospective capital raiser by said transmission means; (c) storage means by which the computer stores the capital raising order that it has received by said receiving means; (d) disclosure means by which the computer discloses said capital raising order to terminals of specified or unspecified potential capital managers; (e) transmission means by which one or more of the terminals of the potential capital managers send the computer their capital management orders targeting the prospective capital raising based on the capital raising order disclosed by the computer with said disclosure means; (f) receiving means by which the computer receives the capital management orders sent from the terminals of the potential capital managers by said transmission means; (g) storage means by which the computer stores the capital management orders that it has received by said receiving means; (h) matching means by which the computer compares the capital raising order and the capital management orders that it has stored by said storage means to determine whether or not their conditions match; (i) updating means by which, if the computer determines with said matching means that their conditions match, it completes the capital raising between the capital raising order and the capital management orders and updates the respective orders that it has stored by said storage means; and (j) notifying means by which the computer notifies the terminal of the prospective capital raiser and the terminals of the potential capital managers of the respective transaction results that it has brought about by said matching means.

Moreover, the disintermediated financial transaction system according to the first aspect of the present invention may be characterized in that said financial transaction is capital management and the system further comprises: (a) transmission means by which two or more of the user terminals send said computer buying orders and selling orders of a capital management product; (b) receiving means by which the computer receives the buying orders and the selling orders sent from the user terminals by said transmission means; (c) storage means by which the computer stores the buying orders and the selling orders that it has received by said receiving means; (d) matching means by which the computer compares the buying orders and the selling orders that it has stored by said storage means to determine whether or not their conditions match; (e) updating means by which, if the computer determines with said matching means that their conditions match, it completes transactions between the buying orders and the selling orders and updates the respective orders that it has stored by said storage means; and (f) notifying means by which the computer notifies the user terminals of the respective transaction results that it has brought about by said matching means.

Furthermore, the disintermediated financial transaction system according to the first aspect of the present invention may be characterized in that said financial transaction is a secondary offering and the system further comprises: (a) transmission means by which a terminal of a prospective selling holder sends said computer a secondary offering order of a capital management product; (b) receiving means by which the computer receives the secondary offering order sent from the terminal of the prospective selling holder by said transmission means; (c) storage means by which the computer stores the secondary offering order that it has received by said receiving means; (d) disclosure means by which the computer discloses said secondary offering order to terminals of specified or unspecified potential purchasers; (e) transmission means by which one or more of the terminals of the potential purchasers send the computer their purchase orders targeting the prospective secondary offering based on the secondary offering order disclosed by the computer with said disclosure means; (f) receiving means by which the computer receives the purchase orders sent from the terminals of the potential purchasers by said transmission means; (g) storage means by which the computer stores the purchase orders that it has received by said receiving means; (h) matching means by which the computer compares the secondary offering order and the purchase orders that it has stored by said storage means to determine whether or not their conditions match; (i) updating means by which, if the computer determines with said matching means that their conditions match, it completes the secondary offering between the secondary offering order and the purchase orders and updates the respective orders that it has stored by said storage means; and (j) notifying means by which the computer notifies the terminal of the prospective selling holder and the terminals of the potential purchasers of the respective transaction results that it has brought about by said matching means.

Besides, the disintermediated financial transaction system according to the first aspect of the present invention may be characterized in that said financial transaction is a capital transaction and the system further comprises: (a) transmission means by which two or more of the user terminals send said computer long position orders and short position orders of a capital transaction product; (b) receiving means by which the computer receives the long position orders and the short position orders sent from the user terminals by said transmission means; (c) storage means by which the computer stores the long position orders and the short position orders that it has received by said receiving means; (d) matching means by which the computer compares the long position orders and the short position orders that it has stored by said storage means to determine whether or not their conditions match; (e) updating means by which, if the computer determines with said matching means that their conditions match, it completes capital transactions between the long position orders and the short position orders and updates the respective orders that it has stored by said storage means; and (f) notifying means by which the computer notifies the user terminals of the respective transaction results that it has brought about by said matching means.

Also, the disintermediated financial transaction system according to the first aspect of the present invention may be characterized in that said financial transaction is a negotiated transaction and the system further comprises: (a) transmission means by which a terminal of a prospective initiating transactor of a financial instrument sends a request for a negotiated transaction to a terminal of at least one potential negotiation counterparty; (b) receiving means by which a terminal of a potential negotiation counterparty receives the request for the negotiated transaction sent from the terminal of the prospective initiating transactor by said transmission means; (c) returning means by which the terminal of the potential negotiation counterparty returns a decision of acceptance, rejection or negotiation with respect to the request for the negotiated transaction that it has received by said receiving means, to the terminal of the prospective initiating transactor; (d) receiving means by which the terminal of the prospective initiating transactor receives the decision returned from the terminal of the potential negotiation counterparty by said returning means; and (e) notifying means by which the terminal of the prospective initiating transactor and/or the terminal of the potential negotiation counterparty notifies said computer of the result of completion or non-completion of the negotiated transaction.

Moreover, the disintermediated financial transaction system according to the first aspect of the present invention may be characterized in that the system further comprises: (a) transmission means by which said terminal of said prospective initiating transactor sends said computer a request for a negotiated transaction of a financial instrument; (b) receiving means by which the computer receives the request for the negotiated transaction sent from the terminal of the prospective initiating transactor by said transmission means; (c) specifying means by which the computer specifies at least one potential negotiation counterparty who matches the request for the negotiated transaction that it has received by said receiving means; and (d) notifying means by which the computer notifies the terminal of the prospective initiating transactor of contact information on the potential negotiation counterparty or counterparties that it has specified by said specifying means.

Furthermore, the disintermediated financial transaction system according to the irst aspect of the present invention may be characterized in that object products of said financial transactions are any one or more capital raising products from among borrowings, bonds, equities and commercial papers.

Besides, the disintermediated financial transaction system according to the first aspect of the present invention may be characterized in that object products of said financial transactions are any one or more capital management products from among loan assets, bonds, equities and commercial papers.

Also, the disintermediated financial transaction system according to the first aspect of the present invention may be characterized in that object products of said financial transactions are any one or more capital transaction products from among foreign exchange products, interest rate derivative products, equity derivative products, hybrid derivative products, forward products, futures products, option products and swap products.

Moreover, the disintermediated financial transaction system according to the first aspect of the present invention may be characterized in that any one or more agencies from among capital management agencies, capital raising agencies, secondary offering agencies and capital transaction agencies can thereby participate in said financial transactions.

Furthermore, the disintermediated financial transaction system according to the first aspect of the present invention may be characterized in that any one or more evaluators from among capital management evaluators, capital raising evaluators and capital transaction evaluators can thereby participate in said financial transactions.

Besides, the disintermediated financial transaction system according to the first aspect of the present invention may be characterized in that any one or more data providers from among providers of capital management reference data, providers of capital raising proposal data and providers of capital transaction proposal data can thereby participate in said financial transactions.

Also, the disintermediated financial transaction system according to the first aspect of the present invention may be characterized in that said financial instruments can thereby be transacted domestically and/or abroad 24 hours a day beyond the confines of national borders and/or session hours.

Moreover, the disintermediated financial transaction system according to the first aspect of the present invention may be characterized in that settlement and administration functions after completion of a financial transaction, such as transaction confirmation, signing or assignment of a contract, funds settlement, securities settlement, inspection of legal or regulatory compliance, and/or the like, are thereby concentrated.

Incidentally, according to a second aspect of the present invention, a financial transaction system is characterized in that any one or more jobs from among processing of bundling a plurality of standardized products to create at least one hybrid product, processing of unbundling at least one hybrid product to create a plurality of standardized products, processing of bundling a plurality of hybrid products to create at least one other hybrid product, and processing of unbundling at least one hybrid product to create a plurality of hybrid products, can appropriately be executed with respect to financial instruments.

Also, according to a third aspect of the present invention, a financial transaction system is characterized in that any one or more simultaneous collective financial transactions from among simultaneous collective capital management, simultaneous collective capital raising, simultaneous collective secondary offerings and simultaneous collective capital transactions can thereby be performed.

Moreover, according to a fourth aspect of the present invention, a server for a computer system supporting disintermediated financial transactions between end customers selected from the group consisting of end capital managers, end capital raisers and end capital transactors is characterized in that the server is equipped to function as a web server and a database server and to communicate with: (a) a plurality of user terminals of said end customers; (b) one or more financial instrument databases storing data regarding financial transactions selected from the group consisting of capital raising, capital management, secondary offerings and capital transactions; and (c) any one or more other databases selected from the group consisting of: (i) one or more contract management databases storing data regarding at least one of financial transaction agreements, prospectuses, reports and disclosures; (ii) one or more settlement management databases storing data regarding at least one of funds settlement and securities settlement; (iii) one or more data distribution databases storing at least one of capital management reference data, capital raising proposal data and capital transaction proposal data; and
(iv) one or more client information databases storing data regarding users of said system, and said server is arranged to enable at least one of an auction mode and a negotiation mode, the auction mode for directly matching according to the principle of balance of supply and demand, financial transaction orders selected from the group consisting of capital raising orders, capital management orders, secondary offering orders and capital transaction orders, and the negotiation mode for providing communication channels between said end customers so that the end customers can directly negotiate with one another to complete said financial transactions.

Furthermore, according to a fifth aspect of the present invention, a method for supporting, by a server, disintermediated financial transactions between end customers selected from the group consisting of end capital managers, end capital raisers and end capital transactors over a computer system is characterized in that the method comprises: (a) performing web server functions and database server functions; (b) communicating with a plurality of user terminals of said end customers; (c) utilizing one or more financial instrument databases storing data regarding financial transactions selected from the group consisting of capital raising, capital management, secondary offerings and capital transactions, and any one or more other databases selected from the group consisting of: (i) one or more contract management databases storing data regarding at least one of financial transaction agreements, prospectuses, reports and disclosures; (ii) one or more settlement management databases storing data regarding at least one of funds settlement and securities settlement; (iii) one or more data distribution databases storing at least one of capital management reference data, capital raising proposal data and capital transaction proposal data; and (iv) one or more client information databases storing data regarding users of said system; and (d) providing at least one of an auction mode and a negotiation mode, the auction mode for directly matching according to the principle of balance of supply and demand, financial transaction orders selected from the group consisting of capital raising orders, capital management orders, secondary offering orders and capital transaction orders, and the negotiation mode for providing communication channels between said end customers so that the end customers can directly negotiate with one another to complete said financial transactions.

Besides, according to a sixth aspect of the present invention, a computer program product is characterized in that the product comprises data and instructions to be loaded by a server and, after being loaded, provides the server with the capacity to perform the above-described method.

Also, according to a seventh aspect of the present invention, a computer-readable storage medium is characterized in that the medium stores the above-described computer program.

Incidentally, as used in the present invention, the term 'end capital manager' shall mean any domestic or foreign individual or entity, except banks or securities companies, that performs capital management through deposits or savings, trading of equities or bonds, transactions of foreign exchange products or financial derivative products, and/or the like. Also, the term 'end capital raiser' shall mean any domestic or foreign individual or entity, except banks or securities companies, that performs capital raising through borrowings, issuance of bonds, equities or commercial papers, transactions of foreign exchange products or financial derivative products, and/or the like. Moreover, as used in the invention, any domestic or foreign individual or entity that functions as both an end capital manager as above and an end capital raiser as above shall be referred to as an 'end capital transactor,' and the terms 'end capital manager,' 'end capital raiser' and 'end capital transactor' shall collectively be encompassed by the term 'end customer.'

Furthermore, as used in the invention, any underlying product to be an object of capital management including a secondary offering shall be referred to as a 'capital management product,' while any underlying product to be an object of capital raising shall be referred to as a 'capital raising product.' Thus, a bond, an equity, a commercial paper or the like that an end capital raiser or a capital raising agency utilizes as a capital raising product is regarded as a capital management product from the standpoint of an end capital manager or a capital management agency that purchases it. Also, if the means for capital raising is a loan, the underlying product for the capital raising side, i.e. the capital raising product is a borrowed liability, while the underlying product for the capital management side, i.e. the capital management product is a loan asset. On the other hand, as used in the invention, foreign exchange products and financial derivative products, which are utilized differently from the capital management products or from the capital raising products, shall be referred to as 'capital transaction products.

Additionally, creation of a short position and a long position with respect to a capital transaction product according to the invention shall mean an act of creation of any position in foreign exchange transactions and/or financial derivative transactions. The term is intended, therefore, to include not only acts of creation of short positions and long positions in any forex spot transactions, any forward transactions, any futures transactions, any option transactions and the like, but also acts of creation of mutually opposing positions in any swap transactions and the like.

In general, the term 'secondary offering' means any sale of securities and the like already issued and then held by capital managers to other numerous capital managers simultaneously under uniform terms and conditions. In the invention, the secondary offering as above shall be treated as one style of capital management between end capital managers. In this case, an end capital manager or capital management agency that is the side that releases held securities and the like in a secondary offering shall respectively be referred to as a 'selling holder' or 'secondary offering agency' to be differentiated from an end capital manager or capital management agency that is the side that purchases said securities and the like. Regarding evaluators and data providers, however, terms different than those that apply to the case of general capital management between end capital managers shall not be used in a secondary offering.

Additionally, in the present invention, the date on which each of various financial transactions is completed shall be referred to as the beginning of the period, the date on which it expires shall be referred to as the end of the period, and the period between the two dates, both inclusive, shall be referred to as the transaction period or the period before maturity.

Incidentally, as used in the invention, the term 'bank' shall mean any conventional financial institution that collects funds from capital managers through deposits or savings, borrowings, issuance of equities or bonds, liquidization or securitization of its assets, savings-type of insurance or mutual aid, and/or the like and then earns a profit margin through lending to capital raisers, proprietary trading of various financial instruments and/or the like. The term shall also mean any conventional financial institution that, on its own or through its subsidiaries and the like, earns various fees or commissions through underwriting securities such as equities, bonds or commercial papers issued by capital raisers and then selling them to capital managers, and/or through intermediating between capital managers in securities trading, between capital transactors in foreign exchange transactions, financial derivative transactions or the like.

In addition, as used in the invention, the term 'securities company' shall mean any conventional financial institution that earns various fees or commissions through underwriting securities such as equities, bonds or commercial papers issued by capital raisers and then selling them to capital managers, and/or through intermediating between capital managers in securities trading, between capital transactors in foreign exchange transactions, financial derivative transactions or the like, and/or that earns trading profits through proprietary trading of various financial instruments or through the like. The term shall also mean any conventional financial institution that, on its own or through its subsidiaries and the like, collects funds from capital managers through borrowings, issuance of equities or bonds, liquidization or securitization of its assets, and/or the like and then earns a profit margin through lending to capital raisers and/or through the like.

Besides, as used in the invention, the term 'capital management reference data' shall include any of the following data:
(a) Economic or financial news, corporate news, political news, and/or the like that affects capital management;
(b) Materials on proposals, evaluation and/or the like of fund allocation including materials on the use of financial derivative products;
(c) Schedules, rumors, reputation and/or the like on capital management of other capital managers;
(d) Schedules, rumors, reputation and/or the like on capital raising of capital raisers;
(e) Materials on economy or finance as a whole: macroeconomic analyses or forecasts, analyses or forecasts of economic indicators or financial indicators, and/or the like;
(f) Materials on equity markets: quantified or codified projected performance of equity prices such as stock ratings and news relating thereto, analyses or forecasts on equity markets as a whole, analyses or forecasts on individual industries, analyses or forecasts on individual companies, analyses or forecasts on equity indices or individual equity prices, information on share holdings, and/or the like including materials on financial derivative markets;
(g) Materials on interest rate and foreign exchange markets: quantified or codified debt service capacities of capital raisers such as credit ratings and news relating thereto, analyses or forecasts on interest rate and foreign exchange markets as a whole, analyses or forecasts on reference interest rates or bond indices, analyses or forecasts on credit risks associated with individual industries or individual companies, analyses or forecasts on individual currencies, and/or the like including materials on financial derivative markets;
(h) Technical analyses and/or the like on equity markets, interest rate and foreign exchange markets, and financial derivative markets;
(i) Various materials available for public inspection in reading rooms of authorities, or the like; and
(j) Market levels such as contractual, indicative or theoretical values of various financial instruments, and fixed or provisional terms of capital raising or secondary offering arrangements, as well as transaction volumes thereof.

Also, the term 'provider of capital management reference data' shall mean any domestic or foreign individual or entity that provides, whether directly or indirectly, data for decision-making on capital management to end capital managers and/or capital management agencies, and shall include:
□ Those who produce research materials such as counselors and research companies;
□ Credit research institutions such as credit rating agencies and credit bureaus;
□ Information providers such as information vendors, optional information vendors, database distributors or producers, and the mass media;
□ Capital raisers;
□ Authorities; and
□ The system operator in accordance with the invention.

Moreover, as used in the invention, the term 'capital raising proposal data' shall include any of the following data:
(a) Economic or financial news, corporate news, political news, and/or the like that affects capital raising;
(b) Opinions on timing, costs, methods of fixing terms, and/or schedules of capital raising;
(c) Prospects of sales demands for products by capital manager or by type of capital manager;
(d) Materials on proposals, evaluation and/or the like of compositions of liabilities and capital including materials on the use of financial derivative products;
(e) Schedules, rumors, reputation and/or the like on capital raising of other capital raisers;
(f) Schedules, rumors, reputation and/or the like on capital management of capital managers;
(g) Materials on economy or finance as a whole: macroeconomic analyses or forecasts, analyses or forecasts of economic indicators or financial indicators, and/or the like;
(h) Materials on equity markets: quantified or codified projected performance of equity prices such as stock ratings and news relating thereto, analyses or forecasts on equity markets as a whole, analyses or forecasts on individual industries, analyses or forecasts on individual companies, analyses or forecasts on equity indices or individual equity prices, information on share holdings, and/or the like including materials on financial derivative markets;
(i) Materials on interest rate and foreign exchange markets: quantified or codified debt service capacities of capital raisers such as credit ratings and news relating thereto, analyses or forecasts on interest rate and foreign exchange markets as a whole, analyses or forecasts on reference interest rates or bond indices, analyses or forecasts on credit risks associated with individual industries or individual companies, analyses or forecasts on individual currencies, and/or the like including materials on financial derivative markets;
(j) Various materials available for public inspection in reading rooms of authorities, or the like; and
(k) Market levels such as fixed or provisional terms of other capital raising arrangements, fixed or provisional terms of secondary offering arrangements, and contractual, indicative or theoretical values of various financial instruments, as well as transaction volumes thereof.

Also, the term 'provider of capital raising proposal data' shall mean any domestic or foreign individual or entity that provides, whether directly or indirectly, data for decision-making on capital raising to end capital raisers and/or capital raising agencies, and shall include:
□ Advisors such as counselors and consultants;
□ Credit research institutions such as credit rating agencies and credit bureaus;
□ Information providers such as information vendors, optional information vendors, database distributors or producers and the mass media;
□ Capital managers;
□ Authorities; and
□ The system operator in accordance with the invention.

Furthermore, as used in the invention, the term 'capital transaction proposal data' shall include any of the following data:
(a) Economic or financial news, corporate news, political news, and/or the like that affects capital transactions;
(b) Opinions on selection, timing for transactions, transaction methods and/or the like of capital transaction products;
(c) Materials on proposals, evaluation and/or the like of compositions of assets, liabilities and capital including materials on the use of financial derivative products;
(d) Schedules, rumors, reputation and/or the like on how others perform capital transactions;
(e) Materials on economy or finance as a whole: macroeconomic analyses or forecasts, analyses or forecasts of economic indicators or financial indicators, and/or the like;
(f) Materials on equity markets: quantified or codified projected performance of equity prices such as stock ratings and news relating thereto, analyses or forecasts on equity markets as a whole, analyses or forecasts on individual industries, analyses or forecasts on individual companies, analyses or forecasts on equity indices or individual equity prices, information on share holdings, and/or the like including materials on financial derivative markets;
(g) Materials on interest rate and foreign exchange markets: quantified or codified debt service capacities of capital raisers such as credit ratings and news relating thereto, analyses or forecasts on interest rate and foreign exchange markets as a whole, analyses or forecasts on reference interest rates or bond indices, analyses or forecasts on credit risks associated with individual industries or individual companies, analyses or forecasts on individual currencies, and/or the like including materials on financial derivative markets;
(h) Technical analyses and/or the like on equity markets, interest rate and foreign exchange markets, and financial derivative markets;
(i) Various materials available for public inspection in reading rooms of authorities, or the like; and
(j) Market levels such as contractual, indicative or theoretical values of various capital transaction products or various cash products, and fixed or provisional terms of capital raising or secondary offering arrangements, as well as transaction volumes thereof.

Also, the term 'provider of capital transaction proposal data' shall mean any domestic or foreign individual or entity that provides, whether directly or indirectly, data for decision-making on capital transactions to end capital transactors and/or capital transaction agencies, and shall include:
□ Advisors such as counselors, consultants and research companies;
□ Credit research institutions such as credit rating agencies and credit bureaus;
□ Information providers such as information vendors, optional information vendors, database distributors or producers and the mass media;
□ Other capital transactors;
□ Authorities; and
□ The system operator in accordance with the invention.

### BRIEF DESCRIPTION OF THE DRAWINGS

Other objects, features and advantages of the present invention will become apparent during the course of the following detailed description of the preferred embodiments, given while referring to the accompanying drawings of which:
FIG. 1 is an embodiment in accordance with the present invention illustrating transactions between end capital managers and end capital raisers;
FIG. 2 is a diagram showing an embodiment of the flows of funds and the fee collection scheme in FIG. 1;
FIG. 3 is an embodiment in accordance with the invention illustrating transactions between end capital managers;
FIG. 4 is a diagram showing an embodiment of the flows of funds and the fee collection scheme in FIG. 3;
FIG. 5 is another embodiment in accordance with the invention illustrating transactions between end capital managers;
FIG. 6 is a diagram showing an embodiment of the flows of funds and the fee collection scheme in FIG. 5;
FIG. 7 is an embodiment in accordance with the invention illustrating transactions between end capital transactors;
FIG. 8 is a diagram showing an embodiment of the flows of funds and the fee collection scheme in FIG. 7; and
FIG. 9 is a block diagram showing another embodiment in accordance with the invention.
FIG. 10 is a diagram showing an embodiment of a configuration.

### DESCRIPTION OF SPECIFIC EMBODIMENTS

The present invention relates to a computer system for supporting disintermediated financial transactions between end customers. That is, said system comprises at least one computer equipped to function as a web server and a database server, a plurality of user terminals of said end customers, at least one computer network connecting said computer and said user terminals, one or more financial instrument databases, and any one or more other databases selected from the group consisting of a contract management database, a settlement management database, a data distribution database and a client information database, and is arranged to enable at least one of an auction mode and a negotiation mode.

The present invention will become more apparent from the following detailed description considered with reference to the accompanying drawings:

Although the description provides much specificity, the present invention is to match financial transaction demands of end customers directly or through their agencies and these enabling details should not be construed as limiting the scope of the invention. Also, it will be readily understood by those persons skilled in the art that the present invention is susceptible to many modifications, adaptations, and equivalent implementations without departing from this scope and without diminishing its attendant advantages. It is therefore intended that the present invention is not limited to the disclosed embodiments but should be defined in accordance with the appended claims.

Now, in the present invention, disintermediated financial transactions that exclude conventional banks, conventional securities companies and/or the like are, by style, categorized as follows:
(a) General capital raising lead by capital raisers;
(b) Capital raising lead by capital managers;
(c) General capital management in the secondary markets, i.e. trading;
(d) Secondary offerings as one style of capital management in the secondary markets; and
(e) Capital transactions comprising foreign exchange transactions and financial derivative transactions.

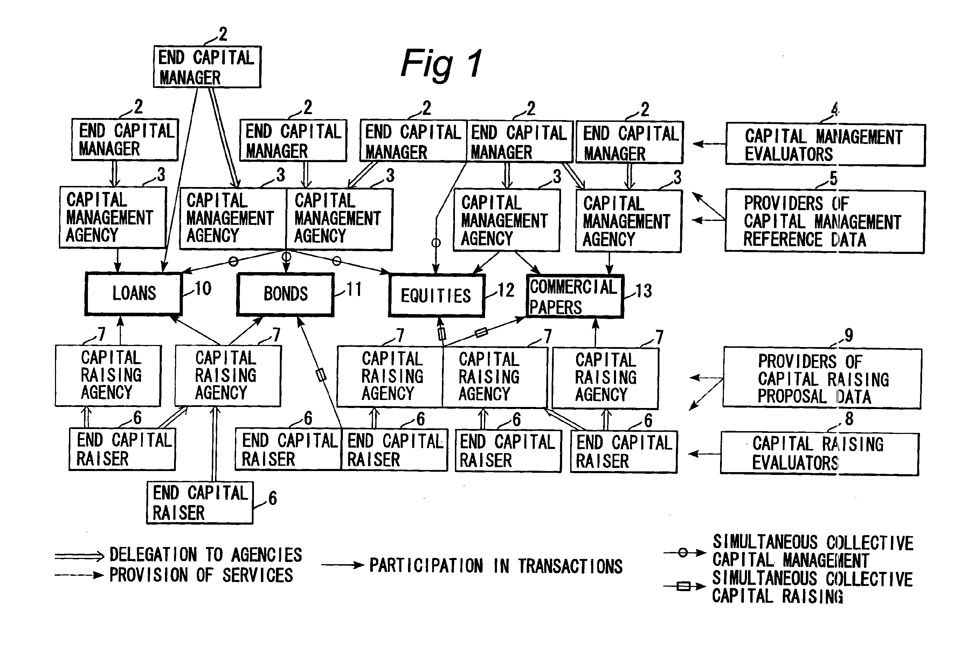

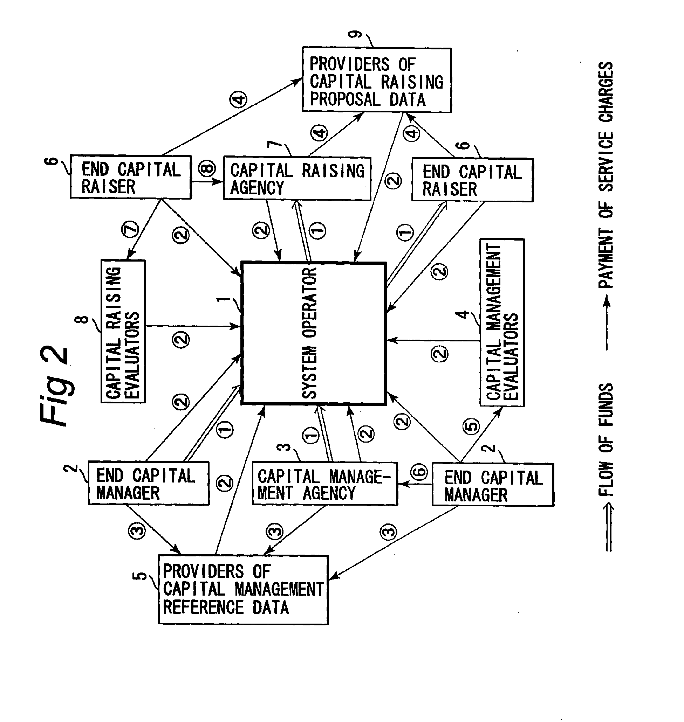

FIGS. 1 and 2 are diagrams that illustrate transactions between end capital managers and end capital raisers. Initially, the style in which, after end capital raisers or capital raising agencies announce outlines of capital raising on the screen, end capital managers and capital management agencies may participate in the capital raising, will be described:

First, the system operator 1 entitles end capital managers 2, capital management agencies 3, capital management evaluators 4, providers of capital management reference data 5, end capital raisers 6, capital raising agencies 7, capital raising evaluators 8, and/or providers of capital raising proposal data 9 who desire to use the service, and establishes sections, by capital raising product, for loans 10, bonds 11, equities 12, commercial papers 13 and/or the like on the screen. The users of the service can execute transmission and receipt of data, communication, consultation, market transactions, transaction confirmations, signing on contracts, settlements and the like in the system.

Next, using a form such as a text or an electronic document format, providers of capital management reference data 5 begin to send their reference data in real time to end capital managers 2 and capital management agencies 3. On the other hand, also using a form such as a text or an electronic document format, providers of capital raising proposal data 9 begin to send their proposal data in real time to end capital raisers 6 and capital raising agencies 7. Meanwhile, the operator 1 begins to display current market levels and transaction volumes of various capital raising products, and their histories in real time in the appropriate sections by product. Based on these various data and market level figures, the end capital managers 2, the capital management agencies 3, the end capital raisers 6 and the capital raising agencies 7 keep track of the levels of interest rates and equity prices, and wait for opportunities for their participation in market transactions.

Additionally, as used in the present embodiment, the term 'market level' shall mean fixed or provisional terms of other capital raising, fixed or provisional terms of secondary offerings, contractual, indicative or theoretical values of various financial instruments, and the like including market levels provided by financial transaction systems not within the scope of the present invention, banks or securities companies.

The end capital managers 2 and the end capital raisers 6 respectively select capital management evaluators 4 and capital raising evaluators 8 based on profile data, evaluation fee scales and the like recorded in databases provided by the system operator 1 or others.

Next, the capital management evaluators 4 selected by the end capital managers 2 introduce capital management agencies 3 that are suited to the capital management policies and objectives of the end capital managers 2, to the end capital managers 2, based on 'past capital management performance,' 'data on comparison with other capital management agencies,' 'data on comparison between performance of market indices and that of capital management,' 'agency fee scales' or the like. Capital management evaluators 4 can format said data into a database form to provide them via the present system so that end capital managers 2 can search them.

Similarly, the capital raising evaluators 8 selected by the end capital raisers 6 introduce capital raising agencies 7 that are suited to the capital raising policies and objectives of the end capital raisers 6, to the end capital raisers 6, based on 'past capital raising performance,' 'data on comparison with other capital raising agencies,' 'data on comparison between performance of market indices and that of capital raising,' 'agency fee scales' or the like. Capital raising evaluators 8 can format said data into a database form to provide them via the present system so that end capital raisers 6 can search them.

End capital managers 2 or end capital raisers 6 require the agencies commissioned to undertake their transactions to provide the evaluators with reports on the performance of capital management or capital raising on a real time basis to allow the evaluators to easily prepare various data to provide for the end capital managers 2 or the end capital raisers 6. Additionally, when end capital managers 2 or end capital raisers 6 participate in transactions independently as well, they can request evaluation of their capital management or capital raising by capital management evaluators 4 or capital raising evaluators 8. Also, the evaluators can provide the end capital managers 2 or the end capital raisers 6 with software or other tools via the present system for evaluation of their capital management or capital raising.

Next, end capital managers 2 or end capital raisers 6 that have received introductions to agencies from evaluators, decide whether to delegate transactions to the introduced agencies, or to independently participate in transactions while receiving only the advice of the agencies. At this point in time, the parties that will participate in market transactions, i.e. end capital managers 2, capital management agencies 3 representing end capital managers 2, end capital raisers 6, and capital raising agencies 7 representing end capital raisers 6 are identified.

Agency agreements that end capital managers 2 conclude with capital management agencies 3 may target specific capital management, or commission all capital management during the agency agreement period, determining the commissioned amounts. Also, an end capital manager 2 can designate a plurality of capital management agencies 3, while a capital management agency 3 can be commissioned as a transaction agency by a plurality of end capital managers 2. Capital management agencies 3 can aggregate and pool the capital management demand of end capital managers 2 with compatible capital management policies and objectives, and be delegated the capital management pool by pool. Also, using domestic or foreign trust accounts or various other funds, capital management agencies 3 can separate the funds commissioned by end capital managers 2 from their own credit risks.

Similarly, agency agreements that end capital raisers 6 conclude with capital raising agencies 7 may target specific capital raising, or commission all capital raising during the agency agreement period, determining the commissioned amounts. Also, an end capital raiser 6 can designate a plurality of capital raising agencies 7, while a capital raising agency 7 can be commissioned as a transaction agency by a plurality of end capital raisers 6. Capital raising agencies 7 can aggregate and pool the capital raising demand of end capital raisers 6 with compatible capital raising policies and objectives, or the capital raising demand of end capital raisers 6 with similar outlooks for future credit ratings, future earnings or the like, and be delegated the capital raising pool by pool.

Consideration of the conflict of interests between end capital managers 2 and end capital raisers 6 indicates that, in principle, the same agency cannot be commissioned for market transactions by both end capital managers 2 and end capital raisers 6.

Additionally, end capital managers 2 may directly participate in transactions without utilizing capital management evaluators 4 or capital management agencies 3, while similarly, end capital raisers 6 may directly participate in transactions without utilizing capital raising evaluators 8 or capital raising agencies 7. Also, the system operator 1 may provide end capital managers 2 and end capital raisers 6 with databases or the like storing profiles and fee scales of agencies so that the end capital managers 2 and the end capital raisers 6 can select their agencies directly, not via evaluators.

Next, end capital managers 2 and capital management agencies 3 transfer the funds to manage or margin requirements, to the system operator 1, and then the operator 1 maintains custody of these funds in separate accounts for end capital managers 2 and capital management agencies 3. End capital raisers 6 and capital raising agencies 7 as well open accounts in the system to receive payments and pay fruits and principal to end capital managers 2 and capital management agencies 3 after the completion of their capital raising.

Next, end capital raisers 6 or their commissioned capital raising agencies 7 that have decided to perform capital raising, gauge the timing of market changes and then convey to the operator 1 outlines of the desired capital raising including amounts to raise, number of shares to issue, lifetimes, existence of collateral or guarantors, uses of funds, and/or the like. Then, the operator 1 discloses the information to all the targeted end capital managers 2 and capital management agencies 3, and lists on the screen as provisional terms, prices, discount ratios, premium ratios, interest rates, yields, yield spreads, upper or lower limits of foreign exchange rates, and/or the like that the end capital raisers 6 or the capital raising agencies 7 desire.

Next, if the end capital managers 2 or the commissioned capital management agencies 3 are interested in the outlines and the provisional terms of the capital raising, referring to the provisional terms, they transmit to the operator 1 limit orders (specification of transaction volumes, particular prices, discount ratios, premium ratios, interest rates, yields, yield spreads or foreign exchange rates, and/or the like) or orders without limit (specification of transaction volumes, but non-specification of terms). The operator 1 uses the matching functions of the present system to prioritize orders without limit, limit orders for provisional terms that more favor the end capital raisers 6, and orders transmitted earlier, and then to automatically allocate amounts or number of shares to the end capital managers 2 and the capital management agencies 3. Where the results of this real-time matching operation cause the amounts to be raised or the number of shares to be issued to fall short of the initially planned figures, if the end capital raisers 6 or the capital raising agencies 7 compromise on the contracted amounts or number of shares, the capital raising ends at this point. If there is not a compromise, the operator 1 somewhat shifts the provisional terms to more favor end capital managers 2 and then solicits limit orders and orders without limit again from end capital managers 2 and capital management agencies 3.

Additionally, using a form such as an electronic document format, end capital raisers 6 and capital raising agencies 7 can distribute prospectuses that they have prepared for their capital raising, to end capital managers 2 and capital management agencies 3.

The operator 1 can invite end capital managers 2 and capital management agencies 3 with compatible capital management policies and objectives, and then operate simultaneous collective capital management by the plurality of end capital managers 2 and capital management agencies 3. The operator 1 may also execute the simultaneous collective capital management in response to requests from a specific plurality of end capital managers 2 or capital management agencies 3. Also, the simultaneous collective capital management may target specific capital raising products, or target all capital raising products within a specified period.

The operator 1 can invite end capital raisers 6 and capital raising agencies 7 with compatible capital raising policies and objectives, and then operate simultaneous collective capital raising by the plurality of end capital raisers 6 and capital raising agencies 7. The operator 1 may also execute the simultaneous collective capital raising in response to requests from a specific plurality of end capital raisers 6 or capital raising agencies 7. Also, the simultaneous collective capital raising may target specific capital raising, or target all capital raising within a specified period. The main capital raising products for which simultaneous collective capital raising can be performed are as follows:
(a) Simultaneous collective borrowing, simultaneous collective issuance of bonds, simultaneous collective issuance of commercial papers, and the like by a plurality of end capital raisers 6 with similar current credit risks and similar outlooks for future credit risks;
(b) Simultaneous collective issuance of equities and the like by a plurality of end capital raisers 6 with similar current levels of equity prices and similar outlooks for future levels of equity prices; and
(c) Simultaneous collective issuance of convertible bonds, simultaneous collective issuance of bonds with equity subscription warrants, and the like by a plurality of end capital raisers 6 with similar current credit risks and similar outlooks for future credit risks, as well as similar current levels of equity prices and similar outlooks for future levels of equity prices.

Next, at the point when transactions are completed between end capital managers 2 or capital management agencies 3, and end capital raisers 6 or capital raising agencies 7, the operator 1 confirms the transactions with both the capital management side and the capital raising side, and the contract amounts are subsequently transferred from the accounts of the end capital managers 2 or capital management agencies 3 to the accounts of the end capital raisers 6 or capital raising agencies 7 through inter-account transfers in the system. With reference to loans, the operator 1 prepares loan agreements or the like, and both the capital management side and the capital raising side sign the documents. With reference to certificates such as equities, bonds and commercial papers, the operator 1 can take custody thereof on its own responsibility, and executes delivery through inter-account transfers. In this case, there is no physical delivery or receipt of the certificates between the capital management side and the capital raising side.

After capital raising is finalized, the operator 1 performs administration of the following items and the like:
(a) With reference to the capital raising, it inspects each of end capital managers 2, capital management agencies 3, end capital raisers 6 and/or capital raising agencies 7 to determine whether there is proper compliance with laws, regulations and internal company rules, appropriate filing of transaction reports with authorities, appropriate disclosure of information to the general public, and/or the like. Also, the operator 1 files its own reports with authorities and/or discloses information to the general public as necessary.
(b) With reference to the capital raising, it provides software or other tools that can be used in risk management and/or profit and loss management in the system, for end capital managers 2, capital management agencies 3, end capital raisers 6 and/or capital raising agencies 7.
(c) It executes payment of fruits and principal from end capital raisers 6 or capital raising agencies 7 to end capital managers 2 or capital management agencies 3 through inter-account transfers in the system. Also, the operator 1 can execute payment of line charges, service charges, advertisement fees, information subscription fees, various evaluations fees, various agency fees, and/or the like through inter-account transfers between and among the parties in the system.
(d) It executes administrative procedures for the various exercise of rights by end capital managers 2, capital management agencies 3, end capital raisers 6 or capital raising agencies 7 such as premature repayment of loans, premature redemption of bonds or commercial papers, interest rate changes for loans or bonds before maturity, stock split-ups, exercise of voting and other shareholder's rights, exercise of rights to convert convertible bonds to equities, and exercise of rights of bonds with warrants to purchase equities.
(e) With reference to loans, bonds, commercial papers and the like, if the creditworthiness of end capital raisers 6 or capital raising agencies 7 substantially declines before maturity, or if end capital raisers 6 or capital raising agencies 7 cannot pay interest or principal before or at maturity resulting in default, the operator 1 fulfills a guidance role in the preservation and recovery of credits and in the institution of legal proceedings on behalf of their creditors (end capital managers 2 or capital management agencies 3) of that point in time.

Now, another style for transactions between end capital managers and end capital raisers is that, after end capital managers or capital management agencies announce on the screen the terms and conditions that they desire of end capital raisers, the end capital raisers or their capital raising agencies accept the capital raising:

First, the system operator 1 entitles end capital managers 2, capital management agencies 3, capital management evaluators 4, providers of capital management reference data 5, end capital raisers 6, capital raising agencies 7, capital raising evaluators 8, and/or providers of capital raising proposal data 9 who desire to use the service, and establishes sections, by capital raising product, for loans 10, bonds 11, equities 12, commercial papers 13 and/or the like on the screen. The users of the service can execute transmission and receipt of data, communication, consultation, market transactions, transaction confirmations, signing on contracts, settlements and the like in the system.

Next, using a form such as a text or an electronic document format, providers of capital management reference data 5 begin to send their reference data in real time to end capital managers 2 and capital management agencies 3. On the other hand, also using a form such as a text or an electronic document format, providers of capital raising proposal data 9 begin to send their proposal data in real time to end capital raisers 6 and capital raising agencies 7. Meanwhile, the operator 1 begins to display current market levels and transaction volumes of various capital raising products, and their histories in real time in the appropriate sections by product. Based on these various data and market level figures, the end capital managers 2, the capital management agencies 3, the end capital raisers 6 and the capital raising agencies 7 keep track of the levels of interest rates and equity prices, and wait for opportunities for their participation in market transactions.

Additionally, as used in the present embodiment, the term 'market level' shall mean fixed or provisional terms of other capital raising, fixed or provisional terms of secondary offerings, contractual, indicative or theoretical values of various financial instruments, and the like including market levels provided by financial transaction systems not within the scope of the present invention, banks or securities companies.

The end capital managers 2 and the end capital raisers 6 respectively select capital management evaluators 4 and capital raising evaluators 8 based on profile data, evaluation fee scales and the like recorded in databases provided by the system operator 1 or others.

Next, the capital management evaluators 4 selected by the end capital managers 2 introduce capital management agencies 3 that are suited to the capital management policies and objectives of the end capital managers 2, to the end capital managers 2, based on 'past capital management performance,' 'data on comparison with other capital management agencies,' 'data on comparison between performance of market indices and that of capital management,' 'agency fee scales' or the like. Capital management evaluators 4 can format said data into a database form to provide them via the present system so that end capital managers 2 can search them.

Similarly, the capital raising evaluators 8 selected by the end capital raisers 6 introduce capital raising agencies 7 that are suited to the capital raising policies and objectives of the end capital raisers 6, to the end capital raisers 6, based on 'past capital raising performance,' 'data on comparison with other capital raising agencies,' 'data on comparison between performance of market indices and that of capital raising,' 'agency fee scales' or the like. Capital raising evaluators 8 can format said data into a database form to provide them via the present system so that end capital raisers 6 can search them.

End capital managers 2 or end capital raisers 6 require the agencies commissioned to undertake their transactions to provide the evaluators with reports on the performance of capital management or capital raising on a real time basis to allow the evaluators to easily prepare various data to provide for the end capital managers 2 or the end capital raisers 6. Additionally, when end capital managers 2 or end capital raisers 6 participate in transactions independently as well, they can request evaluation of their capital management or capital raising by capital management evaluators 4 or capital raising evaluators 8. Also, the evaluators can provide the end capital managers 2 or the end capital raisers 6 with software or other tools via the present system for evaluation of their capital management or capital raising.

Next, end capital managers 2 or end capital raisers 6 that have received introductions to agencies from evaluators, decide whether to delegate transactions to the introduced agencies, or to independently participate in transactions while receiving only the advice of the agencies. At this point in time, the parties that will participate in market transactions, i.e. end capital managers 2, capital management agencies 3 representing end capital managers 2, end capital raisers 6, and capital raising agencies 7 representing end capital raisers 6 are identified.

Agency agreements that end capital managers 2 conclude with capital management agencies 3 may target specific capital management, or commission all capital management during the agency agreement period, determining the commissioned amounts. Also, an end capital manager 2 can designate a plurality of capital management agencies 3, while a capital management agency 3 can be commissioned as a transaction agency by a plurality of end capital managers 2. Capital management agencies 3 can aggregate and pool the capital management demand of end capital managers 2 with compatible capital management policies and objectives, and be delegated the capital management pool by pool. Also, using domestic or foreign trust accounts or various other funds, capital management agencies 3 can separate the funds commissioned by end capital managers 2 from their own credit risks.

Similarly, agency agreements that end capital raisers 6 conclude with capital raising agencies 7 may target specific capital raising, or commission all capital raising during the agency agreement period, determining the commissioned amounts. Also, an end capital raiser 6 can designate a plurality of capital raising agencies 7, while a capital raising agency 7 can be commissioned as a transaction agency by a plurality of end capital raisers 6. Capital raising agencies 7 can aggregate and pool the capital raising demand of end capital raisers 6 with compatible capital raising policies and objectives, or the capital raising demand of end capital raisers 6 with similar outlooks for future credit ratings, future earnings or the like, and be delegated the capital raising pool by pool.

Consideration of the conflict of interests between end capital managers 2 and end capital raisers 6 indicates that, in principle, the same agency cannot be commissioned for market transactions by both end capital managers 2 and end capital raisers 6.

Additionally, end capital managers 2 may directly participate in transactions without utilizing capital management evaluators 4 or capital management agencies 3, while similarly, end capital raisers 6 may directly participate in transactions without utilizing capital raising evaluators 8 or capital raising agencies 7. Also, the system operator 1 may provide end capital managers 2 and end capital raisers 6 with databases or the like storing profiles and fee scales of agencies so that the end capital managers 2 and the end capital raisers 6 can select their agencies directly, not via evaluators.

Next, end capital managers 2 and capital management agencies 3 transfer the funds to manage or margin requirements, to the system operator 1, and then the operator 1 maintains custody of these funds in separate accounts for end capital managers 2 and capital management agencies 3. End capital raisers 6 and capital raising agencies 7 as well open accounts in the system to receive payments and pay fruits and principal to end capital managers 2 and capital management agencies 3 after the completion of their capital raising.

Next, end capital managers 2 or their commissioned capital management agencies 3 gauge the timing of market changes and then convey to the operator 1 transaction volumes, capital management periods, desired names, industries, credit ratings or stock ratings of end capital raisers 6 as objects of their capital management, desired prices, discount ratios, premium ratios, interest rates, yields, yield spreads or upper or lower limits of foreign exchange rates as specific terms, and/or the like. Then, the operator 1 discloses the terms and conditions to specific end capital raisers 6 or their commissioned capital raising agencies 7 if the names of the end capital raisers 6 are specified, or to all the eligible end capital raisers 6 or their commissioned capital raising agencies 7 if the industries, credit ratings or stock ratings of end capital raisers 6 are specified. End capital managers 2 or capital management agencies 3 may also specify a plurality of end capital raisers 6 as objects of their capital management.

Next, the end capital raisers 6 or their commissioned capital raising agencies 7 that have received the disclosures from the operator 1 decide, if they can accept the terms and conditions of the capital raising presented by the end capital managers 2 or the capital management agencies 3, to perform the capital raising in line therewith. On the other hand, if agreement cannot be reached despite their general interest in the terms and conditions, via the operator 1 or directly, negotiations are conducted with the end capital managers 2 or the capital management agencies 3 in an attempt to reach a compromise.

The operator 1 can invite end capital managers 2 and capital management agencies 3 with compatible capital management policies and objectives, and then operate simultaneous collective capital management by the plurality of end capital managers 2 and capital management agencies 3. The operator 1 may also execute the simultaneous collective capital management in response to requests from a specific plurality of end capital managers 2 or capital management agencies 3. Also, the simultaneous collective capital management may target specific capital raising products, or target all capital raising products within a specified period.

Next, at the point when transactions are completed between end capital managers 2 or capital management agencies 3, and end capital raisers 6 or capital raising agencies 7, the operator 1 confirms the transactions with both the capital management side and the capital raising side, and the contract amounts are subsequently transferred from the accounts of the end capital managers 2 or capital management agencies 3 to the accounts of the end capital raisers 6 or capital raising agencies 7 through inter-account transfers in the system. With reference to loans, the operator 1 prepares loan agreements or the like, and both the capital management side and the capital raising side sign the documents. With reference to certificates such as equities, bonds and commercial papers, the operator 1 can take custody thereof on its own responsibility, and executes delivery through inter-account transfers. In this case, there is no physical delivery or receipt of the certificates between the capital management side and the capital raising side.

After capital raising is finalized, the operator 1 performs administration of the following items and the like:
(a) With reference to the capital raising, it inspects each of end capital managers 2, capital management agencies 3, end capital raisers 6 and/or capital raising agencies 7 to determine whether there is proper compliance with laws, regulations and internal company rules, appropriate filing of transaction reports with authorities, appropriate disclosure of information to the general public, and/or the like. Also, the operator 1 files its own reports with authorities and/or discloses information to the general public as necessary.
(b) With reference to the capital raising, it provides software or other tools that can be used in risk management and/or profit and loss management in the system, for end capital managers 2, capital management agencies 3, end capital raisers 6 and/or capital raising agencies 7.
(c) It executes payment of fruits and principal from end capital raisers 6 or capital raising agencies 7 to end capital managers 2 or capital management agencies 3 through inter-account transfers in the system. Also, the operator 1 can execute payment of line charges, service charges, advertisement fees, information subscription fees, various evaluations fees, various agency fees, and/or the like through inter-account transfers between and among the parties in the system.
(d) It executes administrative procedures for the various exercise of rights by end capital managers 2, capital management agencies 3, end capital raisers 6 or capital raising agencies 7 such as premature repayment of loans, premature redemption of bonds or commercial papers, interest rate changes for loans or bonds before maturity, stock split-ups, exercise of voting and other shareholder's rights, exercise of rights to convert convertible bonds to equities, and exercise of rights of bonds with warrants to purchase equities.
(e) With reference to loans, bonds, commercial papers and the like, if the creditworthiness of end capital raisers 6 or capital raising agencies 7 substantially declines before maturity, or if end capital raisers 6 or capital raising agencies 7 cannot pay interest or principal before or at maturity resulting in default, the operator 1 fulfills a guidance role in the preservation and recovery of credits and in the institution of legal proceedings on behalf of their creditors (end capital managers 2 or capital management agencies 3) of that point in time.

Next, an embodiment of the flows of funds and the fee collection scheme will be illustrated in FIG. 2:
In the diagram, ① indicates the flows of payments from an end capital manager 2 and a capital management agency 3 to an end capital raiser 6 and a capital raising agency 7. The margin requirements that the system operator 1 collects with respect to transactions are included.
② indicates that each user pays to the system operator 1 line charges, service charges, advertisement fees for insertion of banner ads or pop-up ads on the screen, and/or the like.
③ indicates that the end capital managers 2 and the capital management agency 3 pay information subscription fees to the providers of capital management reference data 5.
④ indicates that the end capital raisers 6 and the capital raising agency 7 pay information subscription fees to the providers of capital raising proposal data 9.
⑤ indicates that the end capital manager 2 pays capital management evaluation fees to the capital management evaluators 4.
⑥ indicates that the end capital manager 2 pays capital management agency fees to the capital management agency 3.
⑦ indicates that the end capital raiser 6 pays capital raising evaluation fees to the capital raising evaluators 8.
⑧ indicates that the end capital raiser 6 pays capital raising agency fees to the capital raising agency 7.

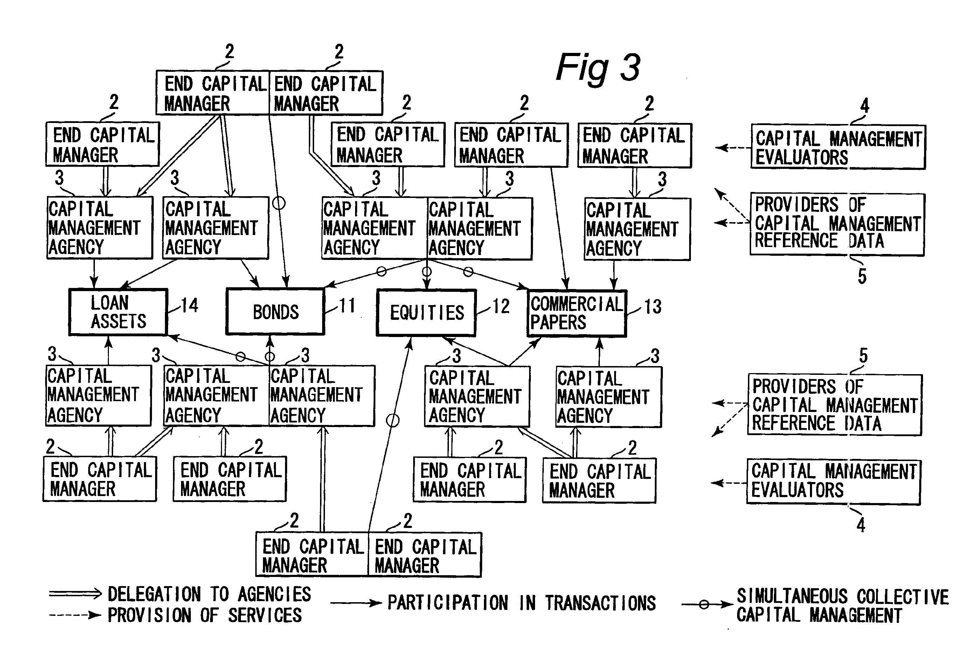

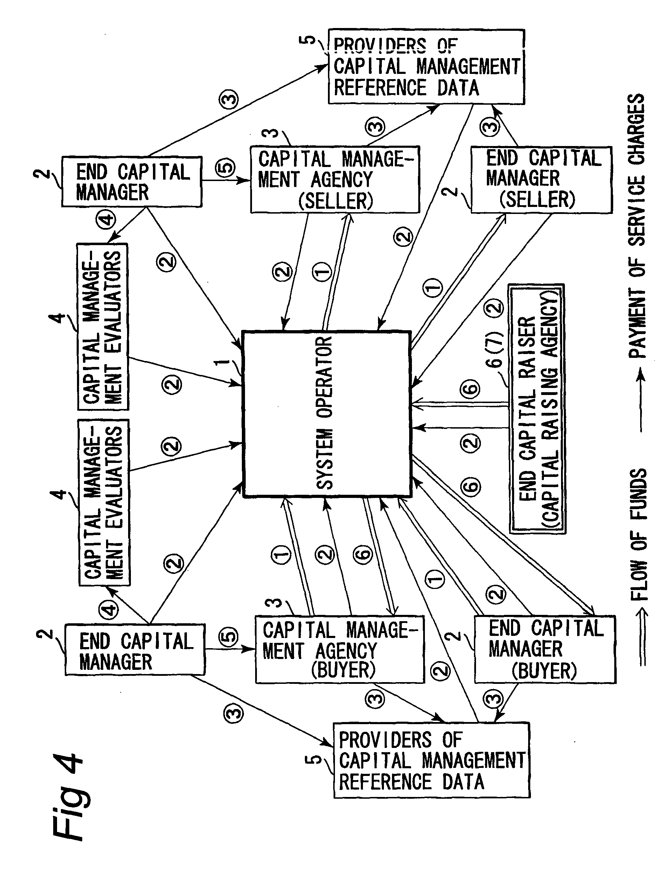

Next, FIGS. 3 and 4 are diagrams that illustrate transactions between and among end capital managers in accordance with the present invention.

First, the style of general trading in the secondary markets will be described: That is, the system operator 1 entitles end capital managers 2, capital management agencies 3, capital management evaluators 4, and/or providers of capital management reference data 5 who desire to use the service, and establishes sections, by capital management product, for loan assets 14, bonds 11, equities 12, commercial papers 13 and/or the like on the screen. The users of the service can execute transmission and receipt of data, communication, consultation, market transactions, transaction confirmations, signing on contracts, settlements and the like in the system.

Next, using a form such as a text or an electronic document format, providers of capital management reference data 5 begin to send their reference data in real time to end capital managers 2 and capital management agencies 3. On the other hand, the operator 1 begins to display current market levels and transaction volumes of various capital management products, and their histories in real time in the appropriate sections by product. Based on these various data and market level figures, the end capital managers 2 and the capital management agencies 3 keep track of the levels of interest rates and equity prices, and wait for opportunities for their participation in market transactions.

Additionally, as used in the present embodiment, the term 'market level' shall mean contractual, indicative or theoretical values of various financial instruments, fixed or provisional terms of secondary offerings or capital raising, and the like including market levels provided by financial transaction systems not within the scope of the present invention, banks or securities companies.

The end capital managers 2 select capital management evaluators 4 based on profile data, evaluation fee scales and the like recorded in databases provided by the system operator 1 or others.

Next, the capital management evaluators 4 selected by the end capital managers 2 introduce capital management agencies 3 that are suited to the capital management policies and objectives of the end capital managers 2, to the end capital managers 2, based on 'past capital management performance,' 'data on comparison with other capital management agencies,' 'data on comparison between performance of market indices and that of capital management,' 'agency fee scales' or the like. Capital management evaluators 4 can format said data into a database form to provide them via the present system so that end capital managers 2 can search them. End capital managers 2 require the capital management agencies 3 commissioned to undertake their transactions to provide the capital management evaluators 4 with reports on the performance of capital management on a real time basis to allow the capital management evaluators 4 to easily prepare various data to provide for the end capital managers 2.

Additionally, when end capital managers 2 participate in transactions independently as well, they can request evaluation of their capital management by capital management evaluators 4. Also, the capital management evaluators 4 can provide the end capital managers 2 with software or other tools via the present system for evaluation of their capital management.

Next, end capital managers 2 that have received introductions to capital management agencies 3 from capital management evaluators 4, decide whether to delegate transactions to the introduced capital management agencies 3, or to independently participate in transactions while receiving only the advice of the capital management agencies 3. Agency agreements that end capital managers 2 conclude with capital management agencies 3 may target specific capital management, or commission all capital management during the agency agreement period, determining the commissioned amounts. Also, an end capital manager 2 can designate a plurality of capital management agencies 3, while a capital management agency 3 can be commissioned as a transaction agency by a plurality of end capital managers 2. Capital management agencies 3 can aggregate and pool the capital management demand of end capital managers 2 with compatible capital management policies and objectives, and be delegated the capital management pool by pool.

Also, using domestic or foreign trust accounts or various other funds, capital management agencies 3 can separate the funds commissioned by end capital managers 2 from their own credit risks.

Additionally, end capital managers 2 may directly participate in transactions without utilizing capital management evaluators 4 or capital management agencies 3. Also, the system operator 1 may provide end capital managers 2 with databases or the like storing profiles and fee scales of capital management agencies 3 so that the end capital managers 2 can select their capital management agencies 3 directly, not via capital management evaluators 4.

Next, end capital managers 2 and capital management agencies 3 transfer the funds to manage or margin requirements, to the system operator 1, and then the operator 1 maintains custody of these funds in separate accounts for end capital managers 2 and capital management agencies 3. Also, it opens accounts in the system for end capital raisers 6 and capital raising agencies 7 as well on which they pay fruits and principal to end capital managers 2 and capital management agencies 3 until maturity.

Next, when end capital managers 2 or capital management agencies 3 have decided to buy or sell specific capital management products, they transmit to the operator 1 limit orders (specification of trading volumes, and particular prices or yields) or orders without limit (specification of trading volumes, but non-specification of prices or yields). The operator 1 uses matching functions of the present system to prioritize orders without limit, limit orders for buying that more favor the sellers, limit orders for selling that more favor the buyers, and orders transmitted earlier, and then to automatically allocate amounts or number of shares to the buyers and the sellers.

The operator 1 can invite end capital managers 2 and capital management agencies 3 with compatible capital management policies and objectives, and then operate simultaneous collective capital management by the plurality of end capital managers 2 and capital management agencies 3. The operator 1 may also execute the simultaneous collective capital management in response to requests from a specific plurality of end capital managers 2 or capital management agencies 3. Also, the simultaneous collective capital management may target specific trading of capital management products, or all trading within a specified period.

At the point when transactions are completed between buyers and sellers, the operator 1 confirms the transactions with both the sides, and the contract amounts are subsequently transferred from the accounts of the buyers to the accounts of the sellers through inter-account transfers in the system. Additionally, contract amounts of loan assets and bonds adjust their accrued interest payable by the buyers to the sellers. With reference to trading of loan assets, the operator 1 prepares agreements and the like under which the sellers assign their claims to the buyers, and both the buyers and the sellers sign the documents. With reference to certificates such as equities, bonds and commercial papers, the operator 1 can take custody thereof on its own responsibility, and executes delivery from the sellers to the buyers through inter-account transfers. In this case, there is no physical delivery or receipt of the certificates between end capital managers 2.

Additionally, using the present system, end capital managers 2 and capital management agencies 3 can lend securities that they hold, to other end capital managers 2 and other capital management agencies 3.

After trading is finalized, the operator 1 performs administration of the following items and the like:
(a) With reference to the trading, it inspects each of end capital managers 2 and/or capital management agencies 3 to determine whether there is proper compliance with laws, regulations and internal company rules, appropriate filing of transaction reports with authorities, appropriate disclosure of information to the general public, and/or the like. Also, the operator 1 files its own reports with authorities and/or discloses information to the general public as necessary.
(b) With reference to the trading, it provides software or other tools that can be used in risk management and/or profit and loss management in the system, for end capital managers 2 and capital management agencies 3.
(c) It executes payment of fruits and principal from end capital raisers 6 or capital raising agencies 7 to end capital managers 2 or capital management agencies 3 through inter-account transfers in the system. Also, the operator 1 can execute payment of line charges, service charges, advertisement fees, information subscription fees, various evaluations fees, various agency fees, and/or the like through inter-account transfers between and among the parties in the system.
(d) It executes administrative procedures for the various exercise of rights by end capital managers 2, capital management agencies 3, end capital raisers 6 or capital raising agencies 7 such as premature repayment of loan assets, premature redemption of bonds or commercial papers, interest rate changes for loan assets or bonds before maturity, stock split-ups, exercise of voting and other shareholder's rights, exercise of rights to convert convertible bonds to equities, and exercise of rights of bonds with warrants to purchase equities.
(e) With reference to loan assets, bonds, commercial papers and the like, if the creditworthiness of end capital raisers 6 or capital raising agencies 7 substantially declines before maturity, or if end capital raisers 6 or capital raising agencies 7 cannot pay interest or principal before or at maturity resulting in default, the operator 1 fulfills a guidance role in the preservation and recovery of credits and in the institution of legal proceedings on behalf of their creditors (end capital managers 2 or capital management agencies 3) of that point in time.

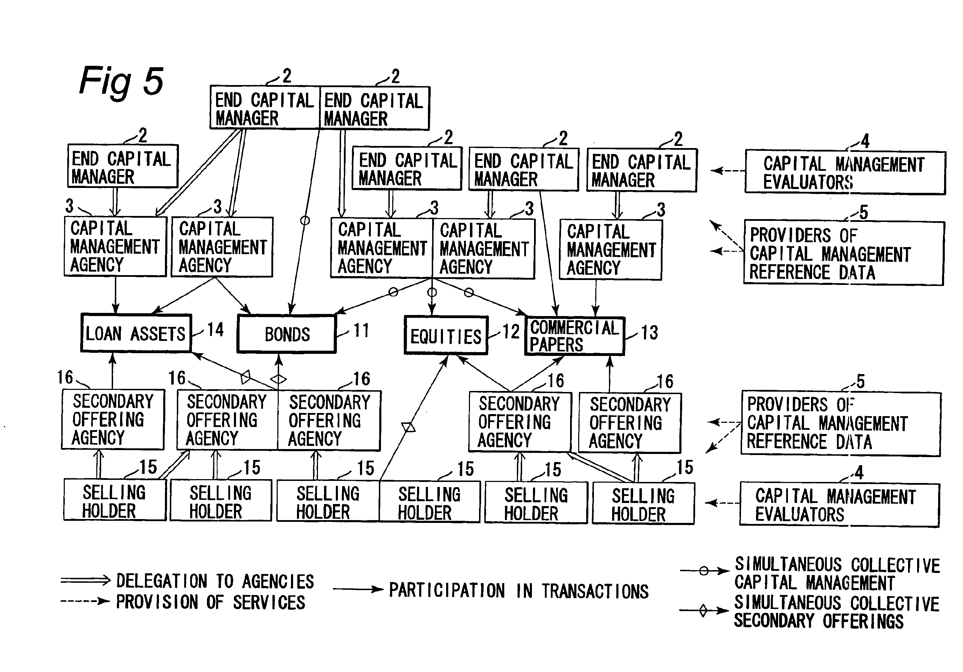

Now, FIG. 5 is a diagram that illustrates the style of secondary offerings, which are also transactions between and among end capital managers in accordance with the present invention:

First, the system operator 1 entitles end capital managers 2, capital management agencies 3, capital management evaluators 4, and/or providers of capital management reference data 5 who desire to use the service, and establishes sections, by capital management product, for loan assets 14, bonds 11, equities 12, commercial papers 13 and/or the like on the screen. The users of the service can execute transmission and receipt of data, communication, consultation, market transactions, transaction confirmations, signing on contracts, settlements and the like in the system.

Next, using a form such as a text or an electronic document format, providers of capital management reference data 5 begin to send their reference data in real time to end capital managers 2 and capital management agencies 3. On the other hand, the operator 1 begins to display current market levels and transaction volumes of various capital management products, and their histories in real time in the appropriate sections by product. Based on these various data and market level figures, the end capital managers 2 and the capital management agencies 3 keep track of the levels of interest rates and equity prices, and wait for opportunities for their participation in market transactions.

Additionally, as used in the present embodiment, the term 'market level' shall mean fixed or provisional terms of other secondary offerings, contractual, indicative or theoretical values of various financial instruments, fixed or provisional terms of capital raising, and the like including market levels provided by financial transaction systems not within the scope of the present invention, banks or securities companies.

The end capital managers 2 select capital management evaluators 4 based on profile data, evaluation fee scales and the like recorded in databases provided by the system operator 1 or others.

Next, the capital management evaluators 4 selected by the end capital managers 2 introduce capital management agencies 3 that are suited to the capital management policies and objectives of the end capital managers 2, to the end capital managers 2, based on 'past capital management performance,' 'data on comparison with other capital management agencies,' 'data on comparison between performance of market indices and that of capital management,' 'agency fee scales' or the like. Capital management evaluators 4 can format said data into a database form to provide them via the present system so that end capital managers 2 can search them. End capital managers 2 require the capital management agencies 3 commissioned to undertake their transactions to provide the capital management evaluators 4 with reports on the performance of capital management on a real time basis to allow the capital management evaluators 4 to easily prepare various data to provide for the end capital managers 2.

Additionally, when end capital managers 2 participate in transactions independently as well, they can request evaluation of their capital management by capital management evaluators 4. Also, the capital management evaluators 4 can provide the end capital managers 2 with software or other tools via the present system for evaluation of their capital management.

Next, end capital managers 2 that have received introductions to capital management agencies 3 from capital management evaluators 4, decide whether to delegate transactions to the introduced capital management agencies 3, or to independently participate in transactions while receiving only the advice of the capital management agencies 3. Agency agreements that end capital managers 2 conclude with capital management agencies 3 may target specific capital management, or commission all capital management during the agency agreement period, determining the commissioned amounts. Also, an end capital manager 2 can designate a plurality of capital management agencies 3, while a capital management agency 3 can be commissioned as a transaction agency by a plurality of end capital managers 2. Capital management agencies 3 can aggregate and pool the capital management demand of end capital managers 2 with compatible capital management policies and objectives, and be delegated the capital management pool by pool.

Also, using domestic or foreign trust accounts or various other funds, capital management agencies 3 can separate the funds commissioned by end capital managers 2 from their own credit risks.

Additionally, end capital managers 2 may directly participate in transactions without utilizing capital management evaluators 4 or capital management agencies 3, while similarly, selling holders 15 may directly participate in transactions without utilizing capital management evaluators 4 or secondary offering agencies 16. Also, the system operator 1 may provide end capital managers 2 and selling holders 15 with databases or the like storing profiles and fee scales of agencies so that the end capital managers 2 and the selling holders 15 can select their agencies directly, not via capital management evaluators 4.

Next, end capital managers 2 and capital management agencies 3 transfer the funds to manage or margin requirements, to the system operator 1, and then the operator 1 maintains custody of these funds in separate accounts for end capital managers 2 and capital management agencies 3. Also, it opens accounts in the system for end capital raisers 6 and capital raising agencies 7 as well on which they pay fruits and principal to end capital managers 2 and capital management agencies 3 until maturity.

Next, end capital managers (hereinafter referred to as 'selling holders 15,' differentiated from other end capital managers) or their commissioned capital management agencies (hereinafter referred to as 'secondary offering agencies 16,' differentiated from other capital management agencies) that have decided to perform secondary offerings, gauge the timing of market changes and then convey to the operator 1 outlines of the desired secondary offerings including names of issues, amounts to offer, number of shares to offer, time to maturity, existence of collateral or guarantors, and/or the like. Then, the operator 1 discloses the information to all the targeted end capital managers 2 and capital management agencies 3, and lists on the screen as provisional terms, upper or lower limits of prices, discount ratios, yields or yield spreads, and/or the like that the selling holders 15 or the secondary offering agencies 16 desire.

Next, if the end capital managers 2 or the capital management agencies 3 are interested in the outlines and the provisional terms of the secondary offerings, referring to the provisional terms, they transmit to the operator 1 limit orders (specification of purchase volumes, particular prices, discount ratios, yields or yield spreads, and/or the like) or orders without limit (specification of purchase volumes, but non-specification of terms). The operator 1 uses matching functions of the present system to prioritize orders without limit, limit orders for provisional terms that more favor the selling holders, and orders transmitted earlier, and then to automatically allocate amounts or number of shares to the end capital managers 2 and the capital management agencies 3. Where the result of this real-time matching operation causes the amounts to be offered or the number of the shares to be offered to fall short of the initially planned figures, if the selling holders 15 or the secondary offering agencies 16 compromise on the contracted amounts or number of shares, the secondary offerings end at this point. If there is not a compromise, the operator 1 somewhat shifts the provisional terms to more favor end capital managers 2 and then solicit limit orders and orders without limit again from end capital managers 2 and capital management agencies 3.

Additionally, using a form such as an electronic document format, end capital raisers 6 and capital raising agencies 7 that are servicing, as the means for their capital raising, capital management products to be objects of secondary offerings, can distribute prospectuses that they have prepared for the secondary offerings to end capital managers 2 and capital management agencies 3.

The operator 1 can invite end capital managers 2 and capital management agencies 3 with compatible capital management policies and objectives, and then operate simultaneous collective purchase by the plurality of end capital managers 2 and capital management agencies 3. The operator 1 may also execute the simultaneous collective purchase in response to requests from a specific plurality of end capital managers 2 or capital management agencies 3.

The operator 1 can invite selling holders 15 and secondary offering agencies 16 with compatible secondary offering policies and objectives, and then operate simultaneous collective secondary offerings of one or more issues by the plurality of selling holders 15 and secondary offering agencies 16. The operator 1 may also execute the simultaneous collective secondary offerings in response to requests from a specific plurality of selling holders 15 or secondary offering agencies 16. Also, the simultaneous collective secondary offerings may target specific secondary offerings of capital management products, or all secondary offerings within a specified period. In the case of a plurality of issues, the main capital management products for which simultaneous collective secondary offerings can be performed are as follows:
(a) Simultaneous collective secondary offerings of a plurality of loan assets, a plurality of bonds, a plurality of commercial papers, and the like with similar current credit risks and similar outlooks for future credit risks;
(b) Simultaneous collective secondary offerings of a plurality of equities and the like with similar current levels of equity prices and similar outlooks for future levels of equity prices; and
(c) Simultaneous collective secondary offerings of a plurality of convertible bonds, a plurality of bonds with equity subscription warrants, and the like with similar current credit risks and similar outlooks for future credit risks, as well as similar current levels of equity prices and similar outlooks for future levels of equity prices.

At the point when transactions are completed between end capital managers 2 or capital management agencies 3, and selling holders 15 or secondary offering agencies 16, the operator 1 confirms the transactions with both the purchase side and the secondary offering side, and the contract amounts are subsequently transferred from the accounts of the end capital managers 2 or capital management agencies 3 to the accounts of the selling holders 15 or secondary offering agencies 16 through inter-account transfers in the system. Additionally, contract amounts of loan assets and bonds adjust their accrued interest payable by the purchase side to the secondary offering side. With reference to loan assets, the operator 1 prepares agreements and the like under which the secondary offering side assigns its claims to the purchase side, and both the purchase side and the secondary offering side sign the documents. With reference to certificates such as bonds, equities and commercial papers, the operator 1 can takes custody thereof on its own responsibility, and executes delivery from the secondary offering side to the purchase side through inter-account transfers. In this case, there is no physical delivery or receipt of the certificates between the purchase side and the secondary offering side.

Additionally, using the present system, end capital managers 2 and capital management agencies 3 can lend securities that they hold, to other end capital managers 2 and other capital management agencies 3.

After a secondary offering is finalized, the operator 1 performs administration of the following items and the like:
(a) With reference to the secondary offering, it inspects each of end capital managers 2, capital management agencies 3, selling holders 15 and/or secondary offering agencies 16 to determine whether there is proper compliance with laws, regulations and internal company rules, appropriate filing of transaction reports with authorities, appropriate disclosure of information to the general public, and/or the like. Also, the operator 1 files its own reports with authorities and/or discloses information to the general public as necessary.
(b) With reference to the secondary offering, it provides software or other tools that can be used in risk management and/or profit and loss management in the system, for end capital managers 2 and capital management agencies 3.
(c) It executes payment of fruits and principal from end capital raisers 6 or capital raising agencies 7 to end capital managers 2 or capital management agencies 3 through inter-account transfers in the system. Also, the operator 1 can execute payment of line charges, service charges, advertisement fees, information subscription fees, various evaluations fees, various agency fees, and/or the like through inter-account transfers between and among the parties in the system.
(d) It executes administrative procedures for the various exercise of rights by end capital managers 2, capital management agencies 3, end capital raisers 6 or capital raising agencies 7 such as premature repayment of loan assets, premature redemption of bonds or commercial papers, interest rate changes for loan assets or bonds before maturity, stock split-ups, exercise of voting and other shareholder's rights, exercise of rights to convert convertible bonds to equities, and exercise of rights of bonds with warrants to purchase equities.
(e) With reference to loan assets, bonds, commercial papers and the like, if the creditworthiness of end capital raisers 6 or capital raising agencies 7 substantially declines before maturity, or if end capital raisers 6 or capital raising agencies 7 cannot pay interest or principal before or at maturity resulting in default, the operator 1 fulfills a guidance role in the preservation and recovery of credits and in the institution of legal proceedings on behalf of their creditors (end capital managers 2 or capital management agencies 3) of that point in time.

Incidentally, transactions between end capital managers 2 can be performed simultaneously with transactions between end capital managers 2 and end capital raisers 6. For example, an end capital raiser 6 issuing bonds in the latter transaction can buy loan assets as an end capital manager 2 in the former transaction to earn profit margins through a difference between the funding cost and the yield on investment.

Next, the flows of funds and the fee collection scheme in the present embodiment will be described:

FIG. 4 is an embodiment of the case of general trading in the secondary markets:
In the diagram, ① indicates that an end capital manager 2 (buyer) and a capital management agency 3 (buyer) pay purchase amounts to an end capital manager 2 (seller) and a capital management agency 3 (seller). The margin requirements that the system operator 1 collects with respect to transactions are included.
② indicates that each user pays to the system operator 1 line charges, service charges, advertisement fees for insertion of banner ads or pop-up ads on the screen, and/or the like.
③ indicates that the end capital managers 2 and the capital management agency 3 pay information subscription fees to the providers of capital management reference data 5.
④ indicates that the end capital managers 2 pay capital management evaluation fees to the capital management evaluators 4.
⑤ indicates that the end capital managers 2 pay capital management agency fees to the capital management agencies 3.
⑥ indicates that the end capital raiser 6 or the capital raising agency 7 pays fruits and principal to holders of specific points in time, i.e. the end capital manager 2 (buyer) and the capital management agency 3 (buyer).

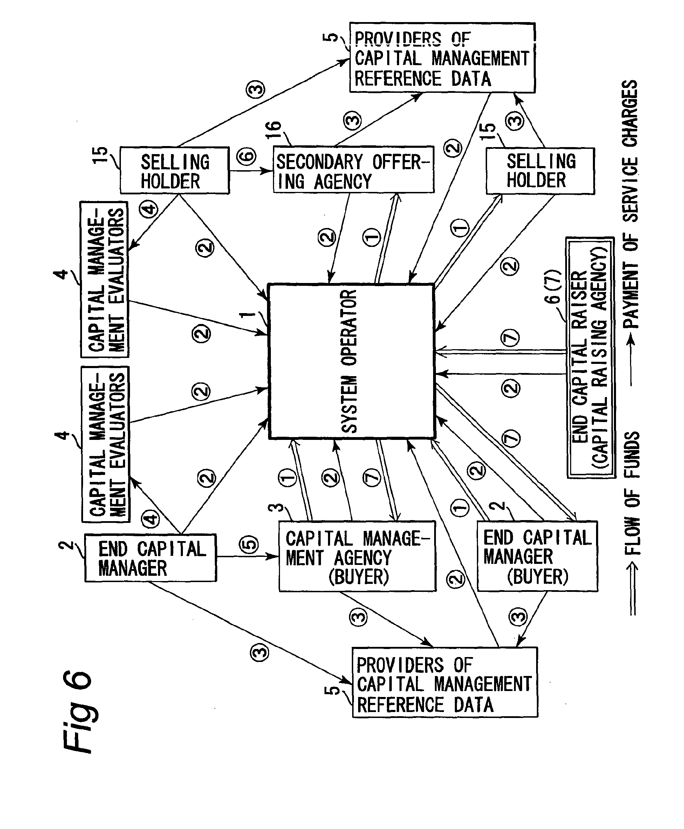

Moreover, FIG. 6 is an embodiment of the case of secondary offerings:
In the diagram, ① indicates that an end capital manager 2 (buyer) and a capital management agency 3 (buyer) pay purchase amounts to a selling holder 15 and a secondary offering agency 16. The margin requirements that the system operator 1 collects with respect to transactions are included.
② indicates that each user pays to the system operator 1 line charges, service charges, advertisement fees for insertion of banner ads or pop-up ads on the screen, and/or the like.
③ indicates that the end capital managers 2, the capital management agency 3, the selling holders 15 and the secondary offering agency 16 pay information subscription fees to the providers of capital management reference data 5.
④ indicates that the end capital manage 2 and the selling holder 15 pay capital management evaluation fees to the capital management evaluators 4.
⑤ indicates that the end capital manager 2 pays capital management agency fees to the capital management agency 3.
⑥ indicates that the selling holder 15 pays secondary offering agency fees to the secondary offering agency 16.
⑦ indicates that the end capital raiser 6 or the capital raising agency 7 pays fruits and principal to holders of specific points in time, i.e. the end capital manager 2 (buyer) and the capital management agency 3 (buyer).

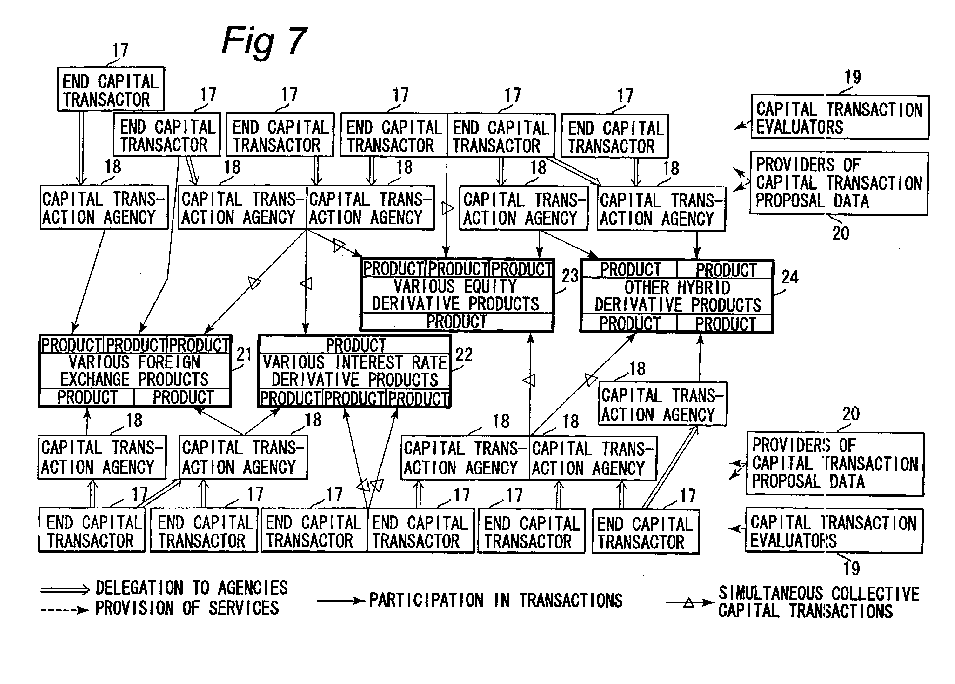

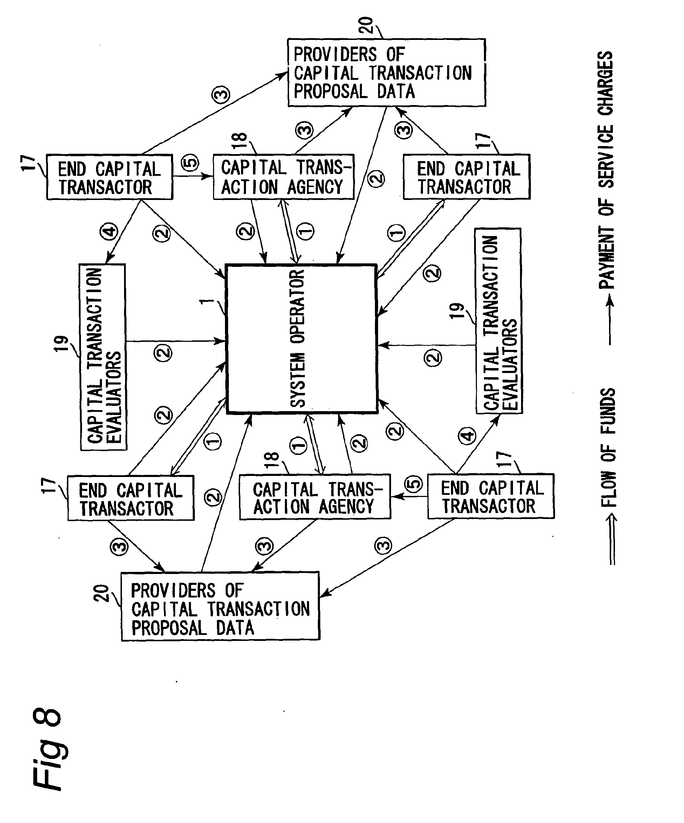

Next, FIGS. 7 and 8 are diagrams that illustrate transactions between and among end capital transactors in accordance with the present invention:

First, the system operator 1 entitles end capital transactors 17, capital transaction agencies 18, capital transaction evaluators 19, and/or providers of capital transaction proposal data 20 who desire to use the service, and establishes sections, by capital transaction product, for various foreign exchange products 21, various interest rate derivative products 22, various equity derivative products 23, other hybrid derivative products 24 and/or the like on the screen. The users of the service can execute transmission and receipt of data, communication, consultation, market transactions, transaction confirmations, signing on contracts, settlements and the like in the system.

Next, using a form such as a text or an electronic document format, providers of capital transaction proposal data 20 begin to send their proposal data in real time to end capital transactors 17 and capital transaction agencies 18. On the other hand, the operator 1 begins to display current market levels and transaction volumes of various capital transaction products, and their histories in real time in the appropriate sections by product. Based on these various data and market level figures, the end capital transactors 17 and the capital transaction agencies 18 keep track of the levels of capital transaction products, and wait for opportunities for their participation in market transactions.

Additionally, as used in the present embodiment, the term 'market level' shall mean contractual, indicative or theoretical values of various foreign exchange products, various financial derivative products or various cash products, fixed or provisional terms of capital raising or secondary offerings, and the like including market levels provided by financial transaction systems not within the scope of the present invention, banks or securities companies.

The end capital transactors 17 select capital transaction evaluators 19 based on profile data, evaluation fee scales and the like recorded in databases provided by the system operator 1 or others.

Next, the capital transaction evaluators 19 selected by the end capital transactors 17 introduce capital transaction agencies 18 that are suited to the capital transaction policies and objectives of the end capital transactors 17, to the end capital transactors 17, based on 'past capital transaction performance,' 'data on comparison with other capital transaction agencies,' 'data on comparison between performance of market indices and that of capital transactions,' 'agency fee scales' or the like. Capital transaction evaluators 19 can format said data into a database form to provide them via the present system so that end capital transactors 17 can search them. End capital transactors 17 require the capital transaction agencies 18 commissioned to undertake their transactions to provide the capital transaction evaluators 19 with reports on the performance of capital transactions on a real time basis to allow the capital transaction evaluators 19 to easily prepare various data to provide for the end capital transactors 17.

Additionally, when end capital transactors 17 participate in transactions independently as well, they can request evaluation of their capital transactions by capital transaction evaluators 19. Also, the capital transaction evaluators 19 can provide the end capital transactors 17 with software or other tools via the present system for evaluation of their capital transactions.

Next, end capital transactors 17 that have received introductions to capital transaction agencies 18 from capital transaction evaluators 19, decide whether to delegate transactions to the introduced capital transaction agencies 18, or to independently participate in transactions while receiving only the advice of the capital transaction agencies 18. Agency agreements that end capital transactors 17 conclude with capital transaction agencies 18 may target specific capital transactions, or commission all capital transactions during the agency agreement period, determining the commissioned amounts. Also, an end capital transactor 17 can designate a plurality of capital transaction agencies 18, while a capital transaction agency 18 can be commissioned as a transaction agency by a plurality of end capital transactors 17. Capital transaction agencies 18 can aggregate and pool the capital transaction demand of end capital transactors 17 with similar creditworthiness and compatible capital transaction policies and objectives, and be delegated the capital transactions pool by pool.

Also, using domestic or foreign trust accounts or various other funds, capital transaction agencies 18 can separate the funds commissioned by end capital transactors 17 from their own credit risks.

Additionally, end capital transactors 17 may directly participate in transactions without utilizing capital transaction evaluators 19 or capital transaction agencies 18. Also, the system operator 1 may provide end capital transactors 17 with databases or the like storing profiles and fee scales of capital transaction agencies 18 so that the end capital transactors 17 can select their capital transaction agencies 18 directly, not via capital transaction evaluators 19.

Next, end capital transactors 17 and capital transaction agencies 18 transfer the funds to transact or margin requirements, to the system operator 1, and then the operator 1 maintains custody of these funds in separate accounts for end capital transactors 17 and capital transaction agencies 18. In the case in which end capital transactors 17 or capital transaction agencies 18 have low creditworthiness, the operator 1 has the end capital transactors 17 or the capital transaction agencies 18 produce collateral or guarantors so as to minimize their credit risks.

Next, when end capital transactors 17 or capital transaction agencies 18 have decided to create long positions or short positions of specific capital transaction products, or to enter into contracts for specific capital transaction products, they transmit to the operator 1 limit orders (specification of transaction volumes, particular prices, interest rates, yields, yield spreads or foreign exchange rates, and/or the like) or orders without limit (specification of transaction volumes and the like, but non-specification of prices, interest rates, yields, yield spreads, foreign exchange rates or the like). The operator 1 uses matching functions of the present system to prioritize orders without limit, limit orders that more favor the counterparties, and orders transmitted earlier, and then to automatically allocate amounts or number of contracts to the end capital transactors 17 and the capital transaction agencies 18.

Since the liquidity of foreign exchange products and financial derivative products tends to decrease as the complexity of their structures increases, the operator 1 enhances the liquidity of products through engineering as described below:
(a) It treats forex spot products and various futures products with high liquidity as standardized products, and has them traded by end capital transactors 17.
(b) Adjusting disagreements in measures and cash flows between the standardized products (price basis vs. interest rate basis, simple interest basis vs. compound interest basis, semi-annual yield basis vs. annual yield basis, advance payment basis vs. deferred payment basis, and/or the like), the operator 1 creates, through synthesis processing, various option products, various forward products and/or the like, and has them traded by end capital transactors 17.
(c) Next, through further synthesis processing of such hybrid products, it creates further complicated products such as various swap products, various cap products, various futures option products and/or the like, and has them traded by end capital transactors 17.
(d) Among the above hybrid products, some products may gain high liquidity depending on market conditions or popularity at specific times, and be virtually upgraded to standardized products.
(e) It unbundles hybrid products that are losing their liquidity and returns them to a state closer to standardized products, and has them traded by end capital transactors 17.
(f) In responding to a long position order for a complicated product, the operator 1 bundles and synthesizes short position orders of a plurality of standardized products and then matches them against the long position order (single long position vis-à-vis multiple short positions). On the other hand, in responding to a short position order of a complicated product, it resolves the order and then solicits long position orders for the individual unbundled products (multiple long positions vis-à-vis single short position).

In foreign exchange transactions and/or financial derivative transactions according to the present invention, as a result of the above bundling and unbundling processing, demands of end capital transactors or capital transaction agencies are not always matched with respect to a single product, and may also be matched in such a manner as a single product vis-à-vis a plurality of products, or a plurality of products vis-à-vis another plurality of products. In the embodiment shown in FIG. 7, demands for three products are matched with demands for two products in the section of various foreign exchange products. Similarly, capital transactions are completed in such manners as one product vis-à-vis three products in the section of various interest rate derivative products, three products vis-à-vis one product in that of various equity derivative products, and two products vis-à-vis another two products in that of other hybrid derivative products.

The operator 1 can invite end capital transactors 17 and capital transaction agencies 18 with similar creditworthiness and compatible capital transaction policies and objectives, and then operate simultaneous collective capital transactions by the plurality of end capital transactors 17 and capital transaction agencies 18. The operator 1 may also execute the simultaneous collective capital transactions in response to requests from a specific plurality of end capital transactors 17 or capital transaction agencies 18. Also, the simultaneous collective capital transactions may target specific transactions of capital transaction products, or all transactions within a specified period.

At the point when a transaction is completed between parties, the operator 1 confirms the transaction with the respective sides, and the contract amount, the accrued interest or the like of which has been adjusted, is subsequently transferred from the account of one party to the account of the other party through an inter-account transfer in the system. Also, the operator 1 prepares agreements with respect to various transactions, and the respective sides sign the documents.

After a capital transaction is finalized, the operator 1 performs administration of the following items and the like:
(a) With reference to the capital transaction, it inspects each of end capital transactors 17 and/or capital transaction agencies 18 to determine whether there is proper compliance with laws, regulations and internal company rules, appropriate filing of transaction reports with authorities, appropriate disclosure of information to the general public, and/or the like. Also, the operator 1 files its own reports with authorities and/or discloses information to the general public as necessary.
(b) With reference to the capital transaction, it provides software or other tools that can be used in risk management and/or profit and loss management in the system, for end capital transactors 17 and/or capital transaction agencies 18.
(c) Through inter-account transfers in the system, it executes payment and receipt of fruits and principal between end capital transactors 17 or capital transaction agencies 18 and their respective counterparties, net settlement after end capital transactors 17 or capital transaction agencies 18 have performed closing transactions, and/or the like. Also, the operator 1 can execute payment of line charges, service charges, advertisement fees, information subscription fees, various evaluations fees, various agency fees, and/or the like through inter-account transfers between and among the parties in the system.
(d) When a long position side of a capital transaction product exercises its rights, the operator 1 executes administrative procedures arising between the long position side and the short position side.
(e) It executes administrative procedures arising from cancellations of contracts or assignments of contracts to third parties by end capital transactors 17 or capital transaction agencies 18.
(f) During periods from the completion of transactions till the expiry of the transactions by closing transactions, by exercise of rights on the long position side or by the like, or during contract periods of transactions entered into, if the creditworthiness of end capital transactors 17 or capital transaction agencies 18 declines, the operator 1 minimizes credit risks by collecting additional margins from the end capital transactors 17 or capital transaction agencies 18, and/or by securing their additional collateral or additional guarantors. If, notwithstanding this, the end capital transactors 17 or capital transaction agencies 18 fall into default, the operator 1 fulfills a guidance role in the preservation and recovery of credits and in the institution of legal proceedings on behalf of their counterparties.

Incidentally, transactions between end capital transactors 17 can be performed simultaneously with transactions between end capital managers 2 and end capital raisers 6. For example, an end capital raiser 6 raising a fund with a fixed interest rate in the latter transaction can participate in a swap transaction of the former transaction as an end capital transactor 17 to virtually change the funding rate into a floating interest rate.

Also, transactions between end capital transactors 17 can be performed simultaneously with transactions between end capital managers 2. For example, an end capital manager 2 buying securities denominated in a foreign currency in the latter transaction can participate in a foreign exchange transaction of the former transaction as an end capital transactor 17 to hedge against the foreign exchange risk in said securities.

Next, the flows of funds and the fee collection scheme in the present embodiment will be illustrated in FIG. 8:
In the diagram, ① indicates the flows of transaction amounts, fruits and principal between end capital transactors 17 or capital transaction agencies 18 and other end capital transactors 17 or other capital transaction agencies 18. The margin requirements that the system operator 1 collects with respect to transactions are included.
② indicates that each user pays to the system operator 1 line charges, service charges, advertisement fees for insertion of banner ads or pop-up ads on the screen, and/or the like.
③ indicates that the end capital transactors 17 and the capital transaction agencies 18 pay information subscription fees to the providers of capital transaction proposal data 20.
④ indicates that the end capital transactors 17 pay capital transaction evaluation fees to the capital transaction evaluators 19.
⑤ indicates that the end capital transactors 17 pay capital transaction agency fees to the capital transaction agencies 18.

Next, various financial instruments illustrated in FIG. 7 shall be defined as follows:

The term 'foreign exchange product' shall mainly refer to the following products. Note that (b) through (f) are also categorized as financial derivative products:
(a) Forex spot transaction, i.e. trading of currencies at the current exchange rates;
(b) Forex forward transaction, i.e. a financial derivative product that trades currencies at future exchange rates;
(c) Currency futures transaction, i.e. a financial derivative product that trades future exchange rates;
(d) Currency option transaction, i.e. a financial derivative product that trades rights to buy or sell currencies;
(e) Currency futures option transaction, i.e. a financial derivative product that trades rights to buy or sell currency futures products; and
(f) Cross-currency swap transaction, i.e. a financial derivative product that swaps receipt or payment of principal and/or interest between different currencies.

The term 'interest rate derivative product' shall mainly refer to the following products:
(a) Interest rate futures transaction, i.e. a financial derivative product that trades future interest rates;
(b) Interest rate futures option transaction, i.e. a financial derivative product that trades rights to buy or sell interest rate futures products;
(c) Bond futures transaction, i.e. a financial derivative product that trades future bond prices;
(d) Bond option transaction, i.e. a financial derivative product that trades rights to buy or sell bonds;
(e) Bond futures option transaction, i.e. a financial derivative product that trades rights to buy or sell bond futures products;
(f) Interest rate swap transaction, i.e. a financial derivative product that swaps receipt or payment between different interest rates such as a fixed interest rate and a floating interest rate;
(g) Swaption transaction, i.e. a financial derivative product that trades rights to exercise swap transactions;
(h) Interest rate forward transaction, i.e. a financial derivative product that fixes future interest rates;
(i) Cap transaction, i.e. a financial derivative product that guarantees upper limits of interest rates;
(j) Floor transaction, i.e. a financial derivative product that guarantees lower limits of interest rates; and
(k) Collar transaction, i.e. a financial derivative product that guarantees both upper and lower limits of interest rates.

The term 'equity derivative product' shall mainly refer to the following products:
(a) Equity index futures transaction, i.e. a financial derivative product that trades future equity indices;
(b) Equity index option transaction, i.e. a financial derivative product that trades rights to buy or sell equity indices;
(c) Equity index futures option transaction, i.e. a financial derivative product that trades rights to buy or sell equity index futures products; and
(d) Individual equity option transaction, i.e. a financial derivative product that trades rights to buy or sell individual equities.

The term 'other hybrid derivative product' shall refer to the following products and others:
(a) Equity swap transaction, i.e. a financial derivative product that swaps between equity indices and interest rates, or between different equity indices; and
(b) Credit swap transaction, i.e. a financial derivative product that swaps between credit risks.

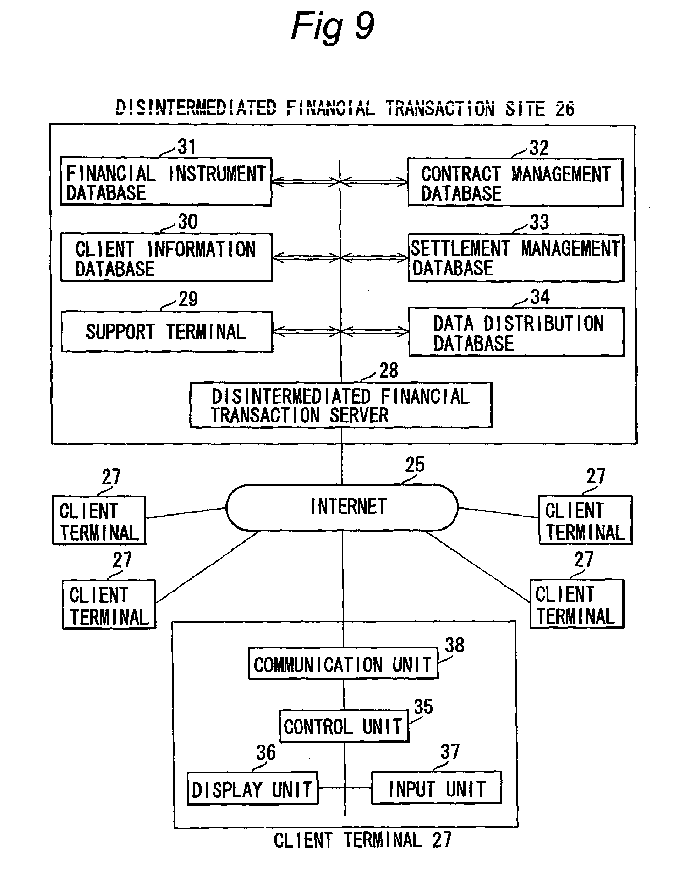

Now, the information technology side of the above-described embodiments will be explained in more detail by using a block diagram of FIG. 9:

First, the present system is arranged on the Internet 25 and comprises a disintermediated financial transaction site 26 (hereinafter referred to as the site 26) for providing various financial markets where conventional intermediaries are eliminated, and a plurality of client terminals 27 for performing financial transactions such as capital management, capital raising, secondary offerings and/or capital transactions in the markets.

Those who use the client terminals 27 are end customers such as end capital managers, end capital raisers, selling holders and end capital transactors, capital management agencies, capital raising agencies, secondary offering agencies and capital transaction agencies that respectively represent the end customers (hereinafter collectively referred to as financial transactors), and others. The financial transactors, by accessing said site 26 from their own client terminals 27, can complete financial transactions on a matching basis and execute various business accompanying the financial transactions.

The present site 26 is for sequentially processing orders of financial instruments from the client terminals 27, for sequentially executing the settlement and administration business related to the financial transactions, and for appropriately distributing to the client terminals 27 the various data necessary for the financial transactions, and comprises at least one disintermediated financial transaction server 28 (hereinafter referred to as the server 28), a support terminal 29, a client information database 30, a financial instrument database 31, a contract management database 32, a settlement management database 33, a data distribution database 34, and a bus for connecting them.

Additionally, the present system uses ISO15022 for the electronic message format and ISO6166 for the securities identification numbering system, as well as, for example, Financial Information eXchange (FIX) for the protocol and eXtensible Markup Language (XML) for the description language of electronic messages, so that jobs from execution to transaction confirmation and settlement of various financial transactions can be electronically processed in a seamless manner 24 hours a day both domestically and abroad.

The present server 28 works by the execution of at least one central processing unit in at least one workstation and in conjunction with at least one program stored in memory, and/or with the like, and is equipped to function as both a WWW server and a database server. The former is a web management function, via the Internet 25, for managing access from client terminals 27 to perform authentication processing, for providing the client terminals 27 with various web pages that appear on screens and that users interface with, and for exchanging information with the client terminals 27. And the latter is a database management function for accessing the client information database 30, the financial instrument database 31, the contract management database 32, the settlement management database 33 and the data distribution database 34, for searching for data on the databases, for reading out the data and for writing data to the databases. Moreover, these databases are stored in the memory or on at least one hard disc device in the workstation, and/or in the like.

The support terminal 29 is a terminal with which the system operator manages the present server 28 and the databases. Using the support terminal 29, the operator can monitor implementation status of financial transactions and business accompanying the financial transactions on all the client terminals 27, and can exchange messages with each client terminal 27 utilizing an e-mail function of the support terminal 29.

The client terminal 27 is a device such as a personal computer, a mobile telephone equipped with a liquid crystal display, a personal digital assistant and/or a pager, and comprises a control unit 35, a display unit 36, an input unit 37, a communication unit 38 and the like. The control unit 35 comprises a processor, memory and the like, and stores operation programs, including a browser, for financial transactions. The display unit 36 and the input unit 37 respectively display and input various data and instructions, and the communication unit 38 communicates with other devices on the Internet 25. Moreover, utilizing e-mail functions of the client terminals 27, the users can exchange messages with the operator and with other client terminals 27.

The financial instrument database 31 stores names or issues, types and attributes, terms and conditions, and the like of capital management products, capital raising products and capital transaction products to be objects of transactions, and also stores, by financial instrument, details of transaction orders, results of matching, information on events related to financial transactions before their expiries such as exercise of various rights and fulfillment of various obligations, together with their histories.

The contract management database 32 stores various agreements in which digital signatures have been entered as well as electronic master agreements that are models thereof, various prospectuses in which digital signatures have been entered as well as electronic master prospectuses that are models thereof, various reports and disclosures respectively to the authorities and to the general public in which digital signatures have been entered as well as electronic master reports and disclosures that are models thereof, and/or the like, and also stores various data generated in accordance with the progress of document preparation processing, together with their histories.

The settlement management database 33 stores funds account numbers, securities account numbers and the like of users of the present system, and also stores various data generated in accordance with the progress of inter-account funds transfer processing and inter-account securities transfer processing between and among the users, together with their histories.

The data distribution database 34 stores various reference and proposal data collected from providers of capital management reference data, providers of capital raising proposal data and/or providers of capital transaction proposal data, and also stores self-introduction materials containing profiles and evaluation fee scales of capital management evaluators, capital raising evaluators and/or capital transaction evaluators collected from themselves, as well as self-introduction materials containing profiles and agency fee scales of capital management agencies, capital raising agencies, secondary offering agencies and/or capital transaction agencies collected from themselves. It also stores, for the purpose of confirming status of conflicts of interest, ownership structure information and human resource information on providers of reference or proposal data, evaluators and/or agencies.

Moreover, the client information database 30 stores the following information:
(a) Individual names and/or corporate names of users of the present system, individual section names in case of the latter, contact information including e-mail addresses, IDs and passwords;
(b) Credit ratings, stock ratings, various financial statements and/or various financial variables of financial transactors;
(c) Capital management policies and objectives in the case in which the financial transactors are end capital managers or capital management agencies, capital raising policies and objectives in the case in which they are end capital raisers or capital raising agencies, secondary offering policies and objectives in the case in which they are selling holders or secondary offering agencies, and/or capital transaction policies and objectives in the case in which they are end capital transactors or capital transaction agencies;
(d) Types and attributes of capital management reference data, capital raising proposal data and/or capital transaction proposal data that financial transactors desire to receive;
(e) Types and attributes of capital management evaluators, capital raising evaluators and/or capital transaction evaluators that financial transactors desire to utilize; and
(f) Types and attributes of capital management agencies, capital raising agencies, secondary offering agencies and/or capital transaction agencies that end users desire to utilize.

Additionally, said ID is a code number or user name allocated to each user, and said password is authentication information that is required when a user accesses the present server 28. The present server 28 identifies an accessing user by an ID and authenticates the accessing user by the combination of the ID and the password.

Now, the methods of matching according to the present system include an auction mode and a negotiation mode.

The auction mode is utilized in cases in which, in general capital raising, in secondary offerings in the secondary markets, or in the like, although an end capital raiser or capital raising agency, or a selling holder or secondary offering agency is originally specified, an end capital manager or capital management agency to be a counterparty of the transaction is not originally specified and orders are matched on the basis of provisional terms basically according to the principle of balance of supply and demand. In these matchings, the capital raising side or the secondary offering side is an exhibitor, while the capital management side is a bidder.

The auction mode is also utilized in cases in which, in general capital management in the secondary markets, in some capital transactions, or in the like, an end capital manager or capital management agency, or an end capital transactor or capital transaction agency to be a counterparty of the transaction is not originally specified and orders are matched basically according to the principle of balance of supply and demand. In these matchings, the buy side is vis-à-vis the sell side, or the long position side is vis-à-vis the short position side.

On the other hand, the negotiation mode is utilized in cases in which, in some capital transactions, in capital raising that is performed in response to a request from a capital management side, or in the like, a counterparty of the transaction is originally specified or selected and orders are matched under an environment in which the principle of balance of supply and demand does not act directly. In these matchings, the long position side is vis-à-vis the short position side, or the capital management side is vis-à-vis the capital raising side.

In the case of the auction mode that is utilized in general capital raising, an end capital raiser or capital raising agency that desires to perform capital raising (hereinafter referred to as an exhibitor) first starts up the operation program stored in the control unit 35 of his or her client terminal 27 to establish a session with the present site 26. Next, the present server 28 sends a top page for login to the client terminal 27 of the exhibitor, who inputs an ID and a password in the page and sends it to the present server 28.

Then, the present server 28, having received the page, accesses the client information database 30 and determines whether or not the combination of the ID and the password is stored therein. If it is stored therein, the present server 28 sends the exhibitor a menu page on which he or she can choose to participate in a financial transaction, to negotiate on a financial transaction, to participate in a simultaneous collective transaction, to inquire about his or her agreement, to inquire about his or her funds account, to inquire about his or her securities account, to peruse distributed data, to view market information, or to report his or her event. Here, the exhibitor chooses to participate in a financial transaction, and then the present server 28 sends the exhibitor an order placement page for inputting details of an order.

Next, the exhibitor, having received the order placement page, inputs therein a name or issue, a type and attribute, and terms and conditions of the capital raising product that he or she desires to service, a desired exhibition period, acceptability of an automatic extension or an early termination of the exhibition, and/or various requests to end capital managers and capital management agencies, and specifies therein desired capital raising numerical values, i.e. provisional terms such as price, discount ratio, premium ratio, interest rate, yield, yield spread or foreign exchange rate, desired capital raising maturity, a desired capital raising volume, and/or the like. After confirming the contents of the order, the exhibitor sends the page to the present server 28. Additionally, the provisional terms, which may be an indication of a specific uniform value or of a range with upper and/or lower limits, may be arbitrarily decided by the exhibitor.

The present server 28 receives the order from the exhibitor, stores it in an exhibition list on the financial instrument database 31, and then sends the exhibitor an order confirmation page for reporting the stored contents thereto, on which the exhibitor confirms the contents of his or her exhibition.

Here, the present server 28 accesses the client information database 30, searches capital management policies and objectives of the system users stored therein, and specifies end capital managers and capital management agencies whose policies and objectives are in line with said exhibition product. Then, the system operator prepares a preliminary prospectus based on the contents of the exhibition, converts it into an electronic document format or the like, and then distributes it simultaneously to said specified end capital managers and capital management agencies via the support terminal 29. Additionally, in the case of an exhibition product that does not require narrowing-down of distribution destinations, the operator distributes the preliminary prospectus to all the end capital managers and capital management agencies.

Next, an end capital manager or capital management agency that has received the preliminary prospectus and has become interested in the capital raising product exhibited and decided to participate in the bidding (hereinafter referred to as a bidder), on his or her own order placement page, specifies the exhibition product, whether it is a limit order or an order without limit, specific desired numerical values vis-à-vis the provisional terms in case of a limit order, his or her own desired capital management volume, and/or the like. After confirming the contents of the order, the bidder sends the page to the present server 28. Additionally, desired numerical values that a bidder specifies may be at levels that do not take the provisional terms into account, but in general, the more the desired numerical values are in line with the provisional terms, the more likely the bid will be successful.

The present server 28 receives the order from the bidder, stores it in a bidding list on the financial instrument database 31, and then sends the bidder an order confirmation page for reporting the stored contents thereto, on which the bidder confirms the contents of his or her own bidding.

The present server 28 matches a capital raising demand and capital management demands by executing processing as described below:

First, concerning orders without limit from bidders, the server 28 makes successful the entire bidding volume within the desired capital raising volume of the exhibitor. Also, concerning limit orders from bidders, the server 28 extracts therefrom the orders whose desired numerical values are within the ranges of the provisional terms of the exhibition product, and the orders whose desired numerical values are beyond the ranges of the provisional terms because they are even more favorable to the exhibitor than the provisional terms, and makes them successful in the order of how much the desired numerical values favor the exhibitor.

Next, the present server 28 stores the contents of the successful bids in the financial instrument database 31 and, based on the data, updates the remaining volume on the exhibition list and on the bidding list. Then, at the stage where subsequent successful bid volumes have been accumulated to reach the remaining volume on the exhibition list, the present server 28 sets as fixed terms the desired numerical values that most favor a bidder out of those of the successful bid orders, thereby completing the capital raising.

At the point when the entire volume of the exhibition product has been successfully bid upon, the system operator prepares, by amending said preliminary prospectus, a successful bid notice that describes the details of the successfully bid upon product including the fixed capital raising numerical values. It sends the successful bid notice to the exhibitor and the successful bidders via the support terminal 29, and the respective parties finally confirm this, whereby the transaction confirmation ends. Then, at this stage, the successful bid notice functions as the final prospectus.

Additionally, the above describes capital raising that finally sets capital raising numerical values as uniform numerical values, but a style in which capital raising numerical values vary at each matching, bidder by bidder, to make successful bids in the order of how much the numerical values favor the exhibitor, may also be actually employed.

In the case of the auction mode that is utilized in secondary offerings in the secondary markets, a selling holder or secondary offering agency that desires to perform a secondary offering (hereinafter referred to as an exhibitor), in said order placement page, inputs a name or issue, a type and attribute, and terms and conditions of the capital management product for which the exhibitor desires the secondary offering, a desired exhibition period, acceptability of an automatic extension or an early termination of the exhibition, and/or various requests to end capital managers and capital management agencies, and specifies desired secondary offering numerical values, i.e. provisional terms such as price, discount ratio, yield or yield spread, a desired secondary offering volume, and/or the like. After confirming the contents of the order, the exhibitor sends the page to the present server 28. Additionally, the provisional terms, which may be an indication of a specific uniform value or of a range with upper and/or lower limits, may be arbitrarily decided by the exhibitor.

The present server 28 receives the order from the exhibitor, stores it in an exhibition list on the financial instrument database 31, and then sends the exhibitor an order confirmation page for reporting the stored contents thereto, on which the exhibitor confirms the contents of his or her exhibition.

Here, the present server 28 accesses the client information database 30, searches capital management policies and objectives of the system users stored therein, and specifies end capital managers and capital management agencies whose policies and objectives are in line with said exhibition product. Then, the system operator prepares a preliminary prospectus based on the contents of the exhibition, converts it into an electronic document format or the like, and then distributes it simultaneously to said specified end capital managers and capital management agencies via the support terminal 29. Additionally, in the case of an exhibition product that does not require narrowing-down of distribution destinations, the operator distributes the preliminary prospectus to all the end capital managers and capital management agencies.

Next, an end capital manager or capital management agency that has received the preliminary prospectus and has become interested in the secondary offering product exhibited and decided to participate in the bidding (hereinafter referred to as a bidder), on his or her own order placement page, specifies the exhibition product, whether it is a limit order or an order without limit, specific desired numerical values vis-à-vis the provisional terms in case of a limit order, his or her own desired purchase volume, and/or the like. After confirming the contents of the order, the bidder sends the page to the present server 28. Additionally, desired numerical values that a bidder specifies may be at levels that do not take the provisional terms into account, but in general, the more the desired numerical values are in line with the provisional terms, the more likely the bid will be successful.

The present server 28 receives the order from the bidder, stores it in a bidding list on the financial instrument database 31, and then sends the bidder an order confirmation page for reporting the stored contents thereto, on which the bidder confirms the contents of his or her own bidding.

The present server 28 matches a secondary offering demand and purchase demands by executing processing as described below:

First, concerning orders without limit from bidders, the server 28 makes successful the entire bidding volume within the desired secondary offering volume of the exhibitor. Also, concerning limit orders from bidders, the server 28 extracts therefrom the orders whose desired numerical values are within the ranges of the provisional terms of the exhibition product, and the orders whose desired numerical values are beyond the ranges of the provisional terms because they are even more favorable to the exhibitor than the provisional terms, and makes them successful in the order of how much the desired numerical values favor the exhibitor.

Next, the present server 28 stores the contents of the successful bids in the financial instrument database 31 and, based on the data, updates the remaining volume on the exhibition list and on the bidding list. Then, at the stage where subsequent successful bid volumes have been accumulated to reach the remaining volume on the exhibition list, the present server 28 sets as fixed terms the desired numerical values that most favor a bidder out of those of the successful bid orders, thereby completing the secondary offering.

At the point when the entire volume of the exhibition product has been successfully bid upon, the system operator prepares, by amending said preliminary prospectus, a successful bid notice that describes the details of the successfully bid upon product including the fixed secondary offering numerical values. It sends the successful bid notice to the exhibitor and the successful bidders via the support terminal 29, and the respective parties finally confirm this, whereby the transaction confirmation ends. Then, at this stage, the successful bid notice functions as the final prospectus.

Additionally, the above describes a secondary offering, which finally sets numerical values in releasing a held capital management product as uniform numerical values, but a style in which release numerical values vary at each matching, bidder by bidder, to make successful bids in the order of how much the release numerical values favor the exhibitor, may also be actually employed.

In the case of the auction mode that is utilized in general capital management in the secondary markets, or in some capital transactions, an end capital manager or capital management agency that desires to perform capital management, or an end capital transactor or capital transaction agency that desires to perform a capital transaction (hereinafter collectively referred to as a prospective transactor) inputs or specifies, in said order placement page, a name or issue, a type and attribute, and terms and conditions of the capital management product or capital transaction product that he or she desires to transact, whether it is a long position order (hereinafter including a buying order) or a short position order (hereinafter including a selling order), whether it is a limit order or an order without limit, a term of validity of the order, acceptability of an automatic extension or an early termination of the term, various requests to his or her counterparties, a desired transaction volume, and/or the like, as well as desired transaction numerical values in case of a limit order such as price, interest rate, yield, yield spread or foreign exchange rate. After confirming the contents of the order, the prospective transactor sends the page to the present server 28.

The present server 28 receives the order from the prospective transactor, and in the case of a long position order, it stores it in a long position order list on the financial instrument database 31, while in the case of a short position order, it stores it in a short position order list on the database. Then, the present server 28 sends the prospective transactor an order confirmation page for reporting the stored contents thereto, on which the prospective transactor confirms the contents of his or her order.

The present server 28 matches long position demands and short position demands by executing processing as described below:

First, in the case in which orders without limit are stored, if it is a long position order, the server 28 matches it to one or more short position orders corresponding to its desired volume, while if it is a short position order, the server 28 matches it to one or more long position orders corresponding to its desired volume. On the other hand, in the case in which limit orders are stored, the server 28 extracts the long position order whose desired numerical values most favor a person that desires to create a short position, and the short position order whose desired numerical values most favor a person that desires to create a long position, determines whether or not a transaction can be completed, and if the transaction can be completed, completes the transaction between both the orders. Also, if there is divergence between desired numerical values on the long position and desired numerical values on the short position and thus a transaction cannot be directly completed, the server 28 may regard intermediate numerical values as completed numerical values.

Next, the present server 28 stores the contents of the completed transactions in the financial instrument database 31 and, based on the data, updates the remaining volume on long positions and the remaining volume on short positions. That is, if transaction of the entire volume is completed, the server 28 deletes the long position orders and the short position orders respectively from the long position order list and the short position order list, while if transaction is partially completed, the server 28 continues to carry the remaining volume on the pertinent long position orders and/or the remaining volume on the pertinent short position orders respectively on the long position order list and/or on the short position order list.

Also, at the point when a transaction has been completed, the present server 28 sends, via the support terminal 29, each person that has completed a long position and each person that has completed a short position, a contract notice that describes details of the product including completed numerical values, on which each party finally confirms the details, thereby ending its transaction confirmation.

Concerning capital transaction products, by adjusting disagreements in measures and cash flows between and among the products such as those between a price basis and an interest rate basis, between a simple interest basis and a compound interest basis, between a semi-annual yield basis and an annual yield basis, between an advance payment basis and a deferred payment basis, it is possible to bundle a plurality of products to create one product and unbundle one product to create a plurality of products. Thus, the system operator increases the variety of products or enhances the liquidity of products by using methods as described below at its own discretion or in cooperation with capital transaction evaluators or the like.

First, the operator stores standardized products such as forex spot products and various futures products in the financial instrument database 31 to allow system users to transact them. Next, the operator bundles some of these standardized products to create various option products, various forward products or the like and stores the created products in the database to allow the users to transact them. Then, the operator bundles some of those new products to create various swap products, various cap products, various futures option products or the like and stores the created products in the database to allow the users to transact them.

As some products among said capital transaction products lose liquidity depending on market conditions or popularity at specific times, in such a case, the operator removes these illiquid products from the database, unbundles the products to create a plurality of standardized products with higher liquidity, and again stores these standardized products in the database to allow the users to transact them.

Furthermore, when the operator finds it difficult to match a capital transaction product stored in the order list on the database due to its low liquidity, the operator increases the probability of matching by bundling a plurality of products stored in the short position order list if the illiquid product is stored in the long position order list, by bundling a plurality of products stored in the long position order list if the illiquid product is stored in the short position order list, and/or by the like.

Incidentally, the characteristics of capital transaction products that allow the above-described bundling and unbundling take effect not only in bundling a plurality of capital transaction products as well as unbundling such a hybrid product into the plurality of capital transaction products, but also in bundling a capital management product and a capital transaction product as well as unbundling such a hybrid product into the capital management product and the capital transaction product, and in bundling a capital raising product and a capital transaction product as well as unbundling such a hybrid product into the capital raising product and the capital transaction product.

Thus, if a hybrid product of a capital raising product and a capital transaction product is stored in the exhibition list in the auction mode that is utilized in capital raising, the system operator may solicit bidders with respect to the individual constituents of the hybrid product, while if a hybrid product of a capital management product and a capital transaction product is stored in the exhibition list in the auction mode that is utilized in a secondary offering, the operator may solicit bidders with respect to the individual constituents of the hybrid product. Also, if a hybrid product of a capital management product and a capital transaction product is stored in the long position order list or in the short position order list in general capital management in the secondary markets, the operator may unbundle the hybrid product into the individual constituents and match them to respective short position orders or to respective long position orders.

Now, in the case of the negotiation mode that is utilized in some capital transactions, or in capital raising that is performed in response to a request from a capital management side, an end capital transactor or capital transaction agency (hereinafter referred to as a requesting party) that desires a capital transaction with a specific end capital transactor or specific capital transaction agency, or an end capital manager or capital management agency (also referred to as a requesting party hereinafter) that desires a specific end capital raiser or specific capital raising agency to perform capital raising, chooses to negotiate on a financial transaction on said menu page, and then the present server 28 sends the requesting party a transaction negotiation page in which details of its transaction negotiation are to be input.

Next, the requesting party, having received the transaction negotiation page, inputs or specifies therein information for specifying one end capital transactor or capital transaction agency, or one end capital raiser or capital raising agency to be a negotiating counterparty (hereinafter collectively referred to as a requested party) or information for narrowing down requested parties to a specific plurality of persons based on their industry, credit rating, stock rating or the like. If the requesting party asks the requested party to perform a capital transaction, it also inputs or specifies therein a name or issue, a type and attribute, and terms and conditions of the desired capital transaction product, whether it is a long position or a short position, a desired capital transaction period, desired capital transaction numerical values such as price, interest rate, yield, yield spread or foreign exchange rate, a desired capital transaction volume, and/or the like, and sends the page to the present server 28. If the requesting party asks the requested party to perform capital raising, it also inputs or specifies therein a type and attribute, and terms and conditions of the capital raising product, desired capital raising maturity, desired capital raising numerical values such as price, discount ratio, premium ratio, interest rate, yield, yield spread or foreign exchange rate, a desired capital raising volume, and/or the like that it desires from the requested party as specific conditions, and sends the page to the present server 28.

In the case in which the requesting party has individually specified one requested party, the present server 28, having received the transaction negotiation page, adds the ID of the requesting party to the e-mail address of the requested party and sends the page thereto. On the other hand, in the case in which the requesting party has specified conditions concerning selection of requested parties, the present server 28, based on information such as industries, credit ratings or stock ratings of financial transactors stored in the client information database 30, adds the ID of the requesting party to the e-mail addresses of all financial transactors satisfying said conditions and distributes the transaction negotiation page thereto. Also, in the case in which the requesting party desires to select a requested party individually out of candidates satisfying said conditions, the present server 28 feeds back names of all the candidates to the requesting party, causes it to select a requested party, and then sends the transaction negotiation page to the requested party.

Next, the requested party, having received the transaction negotiation page, confirms the contents of the proposal from the requesting party, selects completion, non-completion or negotiation as a stance thereon, and then returns the page to the requesting party.

If the requested party chooses not to complete the transaction out of the choices, the capital transaction or capital raising is obviously not completed. On the other hand, if the requested party chooses to complete the transaction, the present server 28 as well as the requesting party is notified of the completion of the capital transaction or capital raising. Moreover, if the requested party chooses to negotiate, it can counterpropose the type and attribute, the terms and conditions, the lifetime, the numerical values and/or the transaction volume of the capital transaction product or capital raising product. At this point, the requested party (hereinafter referred to as the new requesting party) converts the received transaction negotiation page into the page for reply, revises the desired capital transaction conditions or capital raising conditions on this page, and then returns it as a new proposal to the requesting party (hereinafter referred to as the new requested party). In this way, the new requested party and the new requesting party search for a point of contact for a negotiated transaction.

Additionally, in the above-described embodiment, the present server 28 is involved in the process until the point of contact between both the parties is established. It is also possible, however, that the requesting party begins transaction negotiation directly with the requested party utilizing an e-mail function, and both the parties or either of them notifies the server 28 only of their transaction result.

Simultaneous collective capital management, simultaneous collective capital raising, simultaneous collective secondary offerings and/or simultaneous collective capital transactions by financial transactors (hereinafter referred to as simultaneous collective financial transactions) may be lead by the system operator or by the transacting parties.

In the case in which a simultaneous collective financial transaction is lead by the operator, the operator first groups financial transactors based on their capital management policy and objective, capital raising policy and objective, secondary offering policy and objective or capital transaction policy and objective, industry, credit rating, stock rating, various financial variables, and/or the like stored in the client information database 30. Then, via the support terminal 29, it informs each grouped financial transactor that a simultaneous collective financial transaction with other financial transactors within the same group is feasible, what attribute is common among the financial transactors forming the group, what type of simultaneous collective financial transaction is feasible under the market conditions of that point in time, and how much the transaction volume of the entire group will be if the simultaneous collective financial transaction is realized.

Next, the financial transactors that have received the message and have decided to participate in the simultaneous collective financial transaction inform the operator to that effect. Then, based on records of transactions in the present system or on the like, the operator determines who represents each group out of the financial transactors that have decided to participate. While communicating with the other financial transactors within the group via the client terminal 27, the representative performs a financial transaction on their behalf in the present system.

On the other hand, in the case in which a simultaneous collective financial transaction is lead by a transacting party, a financial transactor that desires cooperation with other specific financial transactors (hereinafter referred to as a requesting party) chooses to participate in a simultaneous collective transaction on said menu page, and then the present server 28 sends the requesting party a cooperation negotiation page in which details of its cooperation negotiation are to be input.

Next, the requesting party, having received the cooperation negotiation page, inputs or specifies therein information for specifying one financial transactor with whom it desires to negotiate (hereinafter referred to as a requested party) or information for narrowing down requested parties to a specific plurality of persons based on its predetermined conditions, a desired type of simultaneous collective financial transaction, a desired transaction period, a desired transaction volume and/or the like, and sends the page to the present server 28.

Then, the present server 28, having received the cooperation negotiation page, adds the ID of the requesting party to the e-mail address of the requested party that the requesting party has individually specified, or to the e-mail addresses of all the requested parties satisfying the conditions that the requesting party has predetermined, and sends the page thereto. Next, the requested party, having received the page, confirms the contents of the proposal from the requesting party, selects completion, non-completion or negotiation as a stance thereon, and then returns the page to the requesting party.

If the requested party chooses not to complete the cooperation out of the choices, the cooperation is obviously not completed. On the other hand, if the requested party chooses to complete the cooperation, the present server 28 as well as the requesting party is notified of the completion. Moreover, if the requested party chooses to negotiate, it can counterpropose the type, the transaction period, the transaction volume and/or the like of the simultaneous collective financial transaction. At this point, the requested party (hereinafter referred to as the new requesting party) converts the received cooperation negotiation page into the page for reply, revises the desired cooperation conditions on this page, and then returns it as a new proposal to the requesting party (hereinafter referred to as the new requested party). In this way, the new requested party and the new requesting party search for a point of contact for cooperation.

The financial transactors that have decided to cooperate select a representative out of the members. While communicating with the other members via the client terminal 27, the representative performs a financial transaction on their behalf in the present system.

In the contract management database 32, electronic master agreements by product for capital management, capital raising, secondary offerings and capital transactions, various tie-in financial transactions that are applied styles of these financial transactions, and assignment to third parties and premature cancellation of financial transaction agreements, are stored. The electronic master agreement referred to in this context means an electronic document prepared by combining input data that has described items and conditions (hereinafter respectively referred to as general items and general conditions) commonly used in each transaction style or in each type and attribute of a transaction product, with an electronic form. Also, an electronic form means electronic data converted from an ordinary paper-based form for a contract, and consists of a field in which detailed contents of an agreement and addresses and names of contracting parties are to be input and a field in which digital signatures of the contracting parties are to be entered.

In the electronic master agreement in accordance with the present system, although general items and general conditions are input in predetermined writing frames in an electronic form, a field in which items and conditions that vary according to individual financial transaction agreements (hereinafter respectively referred to as additional items and additional conditions) are to be input, and a field in which a financial transactor and the system operator to be contracting parties are to input their addresses and names and enter their digital signatures, are left blank.

In a financial transaction agreement in accordance with the present invention, at the stage where transaction confirmation is finalized, the present server 28 accesses the financial instrument database 31, reads out additional items and additional conditions such as a name or issue, terms and conditions, a transaction period, completed numerical values and a completed volume of the pertinent product stored therein, and writes them to blank fields of said electronic master agreement.

Thereafter, in capital raising and a secondary offering completed by the auction mode, in the blank fields of an agreement between the operator and an exhibitor and an agreement between the operator and a successful bidder, the respective parties input their addresses and names and enter their digital signatures, whereby both the agreements come into force. In capital management and a capital transaction completed by the auction mode, in the blank fields of an agreement between the operator and a person who has completed a long position and an agreement between the operator and a person who has completed a short position, the respective parties input their addresses and names and enter their digital signatures, whereby both the agreements come into force. In practice, via the support terminal 29, the present server 28 sends a transacting party an agreement to which additional items and additional conditions have been written and in which the operator has entered its signature. Next, the transacting party enters its signature and returns the agreement to the present server 28, and the server 28 stores it in the contract management database 32.

Incidentally, the reason why the operator separately enters into agreements with an exhibitor and with a successful bidder, or separately enters into agreements with a person who has completed a long position and with a person who has completed a short position, is to maintain the anonymity of a financial transaction between the exhibitor and the successful bidder, or between the person who has completed a long position and the person who has completed a short position. However, if both the parties have agreed, the exhibitor and the successful bidder, or the person who has completed a long position and the person who has completed a short position, can enter into an agreement directly.

On the other hand, in capital transactions and capital raising completed by the negotiation mode, in the blank fields of an agreement between a long position side and a short position side, or between a capital raising side and a capital management side, the respective parties input their addresses and names and enter their digital signatures, whereby the agreement comes into force. In practice, via the support terminal 29, the present server 28 sends a short position side or a capital raising side an agreement to which additional items and additional conditions have been written, and the short position side or capital raising side having received it, enters its digital signature and returns it to the server 28. Next, the present server 28 sends it to a long position side or a capital management side, and the long position side or capital management side having received it, enters its digital signature and returns it to the server 28. Then, the present server 28 stores the signed agreement in the contract management database 32.

Incidentally, the procedure during a transaction period in a case in which a contracting party assigns its agreement to a third party, or in a case in which a contracting party cancels its agreement is similarly executed by using an electronic master agreement for assignment or cancellation.

In the contract management database 32, in addition to a financial transaction agreement itself, various data generated from the beginning of preparation of an agreement until signing is finalized, such as an identifier allocated to each agreement, a digital signature, and history data of procedures performed by a contracting party and the present server 28, are sequentially stored in accordance with the progress of agreement processing. Thus, the originality of a document can be confirmed by comparing the document before a digital signature is entered and the document after it is entered.

Also, a digital signature to be entered in a financial transaction agreement is prepared by using a secret key existing, for example, in an IC card held by a contracting party or inside its client terminal 27. Thus, a signer can be authenticated if the entered digital signature is decoded and verified.

Additionally, a contracting party can confirm at any time its own financial transaction agreement stored in the contract management database 32 by choosing to inquire about its agreement on said menu page.

Also stored in the contract management database 32 are electronic master prospectuses for capital raising and secondary offerings that are required to deliver prospectuses, on which general items and general conditions corresponding to each style of transaction or each type and attribute of a transaction product are described. At the stage where a preliminary prospectus is to be delivered, the present server 28 accesses the financial instrument database 31, and reads out additional items and additional conditions of the exhibition product stored therein such as a name or issue, terms and conditions, a desired exhibition period, acceptability of an automatic extension or an early termination of the exhibition, desired capital raising numerical values (i.e. provisional terms) or desired secondary offering numerical values (i.e. provisional terms), a desired capital raising lifetime or a predetermined maturity of the secondary offering product, and a desired capital raising volume or a desired secondary offering volume. Then, the server 28 writes them to blank fields of said electronic master prospectus, and sends the prospectus to the end capital raiser or capital raising agency desiring capital raising this time, or, in the case of a secondary offering, to the end capital raiser or capital raising agency servicing, as a capital raising means, its capital management product that is an object of the secondary offering this time.

Next, the capital raising side receives the preliminary prospectus, inputs its address and name and enters its digital signature in the blank fields thereon, and returns the prospectus to the present server 28. Then, the server 28 enters an identifier of the capital raising side therein, distributes it to electronic mail addresses of end capital managers and capital management agencies that the server 28 has specified or to electronic mail addresses of unspecified end capital managers and capital management agencies, and stores the electronic preliminary prospectus in the contract management database 32. On the other hand, concerning capital raising or a secondary offering for which the system operator is obliged to deliver a prospectus, the operator itself inputs its address and name and enters its digital signature therein, and then delivers the electronic preliminary prospectus to the capital management side.

At the stage where the terms of the capital raising or the secondary offering have been fixed, the present server 28 amends part of the additional conditions on the electronic preliminary prospectus to prepare a successful bid notice or an electronic final prospectus. Then, the server 28 causes the capital raising side to enter its digital signature or the server 28 enters a digital signature of its own, and distributes the notice or the prospectus to the capital management side. Additionally, in the case of a secondary offering, at the stage where the present server 28 distributes an electronic preliminary or final prospectus to a capital management side, the server 28 may add to the list of recipients a secondary offering party, i.e. a selling holder or a secondary offering agency.

Incidentally, a transacting party can confirm at any time electronic prospectuses stored in the contract management database 32 by choosing to inquire about its agreement using the previously described function therefor on said menu page. Thus, as a method of delivering a prospectus, other than the above-described distribution, there is a method in which the system operator notifies a capital management side or a secondary offering side via the support terminal 29 only that the prospectus has been issued, and the capital management side or the secondary offering side, having been notified to that effect, actively accesses the contract management database 32 and downloads the prepared electronic preliminary or final prospectus.

Also stored in the contract management database 32 are electronic master reports and electronic master disclosures for financial transactions respectively required to be reported to the authorities and to be disclosed to the general public, on which general items and general conditions corresponding to each style of transaction or each type and attribute of a transaction product, and each reporting or disclosing destination, are described. At the stage where signing on a financial transaction agreement is finalized, the present server 28 accesses the financial instrument database 31, reads out additional items and additional conditions of the pertinent product stored therein such as a name or issue, terms and conditions, a transaction period, completed numerical values and a completed volume, writes them to blank fields of said electronic master report or disclosure, and sends it to the transacting party.

Then, the transacting party receives the report or disclosure, inputs its address and name and enters its digital signature in the blank fields thereon, and returns the report or disclosure to the present server 28. Next, the server 28 enters an identifier of the transacting party therein and sends it to electronic mail addresses of the authorities or the mass media that the transacting party has specified. Thereafter, the server 28 stores it in the contract management database 32. On the other hand, concerning a financial transaction that the system operator is obliged to report or disclose, the operator itself inputs its address and name and enters its digital signature therein, and then sends the report or disclosure to the authorities or the mass media.

Additionally, a transacting party can confirm at any time report documents or disclosure documents of its own stored in the contract management database 32 by choosing to inquire about its agreement on said menu page.

Besides, the present server 28 also executes similar processing in the case in which a new obligation to report or disclose has developed in accordance with the occurrence of an event between transacting parties during their transaction period, such as premature repayment of a loan asset, premature redemption of a bond or a commercial paper, an interest rate change for a loan asset or a bond before its maturity, a stock split-up, exercise of voting and other shareholder's rights, exercise of a right to convert a convertible bond to an equity, exercise of a right of a bond with a warrant to purchase an equity, or exercise of a right of a financial derivative product by a long position side. Also, at the time of the occurrence of the above-described events or at other times, the operator sends a transacting party a questionnaire or the like via the support terminal 29 and realizes communication with it in order to inspect whether or not said party is in compliance with its financial transaction agreement, with laws governing said prospectus, report or disclosure, and with other laws and regulations.

The settlement management database 33 stores information such as funds account numbers, payment and receipt histories and funds account balances of users of the present system, i.e. end customers such as end capital managers, end capital raisers, selling holders and end capital transactors, various agencies, various evaluators, various providers of reference or proposal data, and advertisers who place advertisements related to financial transactions in the system.

If a user chooses to inquire about his or her funds account on the above-described menu page, the present server 28 accesses the settlement management database 33 and sends the client terminal 27 a funds account confirmation page on which the present funds account balance and the payment and receipt history of the user are recorded. Additionally, the system operator as well has a funds account of its own and hence a funds account number and uses it for payment and receipt of money between the account and the funds accounts of users.

Payment and receipt, between transacting parties, of cash flows that arise from the completion till the expiry of a financial transaction, i.e. payment and receipt of cash inflows and outflows of principal parts of transaction products and those of fruits parts of transaction products such as interest and dividends accruing from the principal, are executed through inter-account funds transfers in the present system. The present server 28 accesses the financial instrument database 31 in a predetermined cycle and recognizes payment and receipt dates of cash flows of a completed transaction product stored therein. Then, via the support terminal 29 one day before the pertinent date, for example, the server 28 sends the client terminal 27 of each transacting party a funds settlement notice that notifies the party that the inter-account funds transfer will be executed.

The individual name and/or corporate name of a payer or a recipient, funds account number, identifier of a financial transaction agreement, amount payable or amount receivable, execution date of the funds settlement, and the like are indicated on the funds settlement notice. Then, the payer or the recipient notifies the present server 28 that this funds settlement information has been confirmed.

Next, in accordance with the funds settlement information, the present server 28 executes the inter-account funds transfer that transfers the predetermined amount of money from the payer's funds account to the recipient's funds account. Then, the server 28 updates the information such as funds account balances and payment and receipt histories of the payer and the recipient stored in the settlement management database 33 to reflect the transfer of money.

Additionally, in a financial transaction completed by the auction mode, for the purpose of maintaining the anonymity of transacting parties, the system operator becomes the recipient if a transacting party is a payer, and the payer if a transacting party is a recipient. On the other hand, in a financial transaction completed by the negotiation mode, one transacting party is a payer, while the other is a recipient and thus the operator does not intermediate directly.

In the present system, the inter-account funds transfer that uses the funds settlement notice is executed in the following transfers of money as well. However, if payment and receipt of cash flows and/or various service charges concerning a completed transaction product coincide with one another in timing between a payer and a recipient, the operator may write to the funds settlement notice an amount found by offsetting them and execute the inter-account funds transfer on a net amount basis:
(a) During a transaction period, the operator may charge a transacting party an additional margin or refund an excess margin to the party due to an increase or decrease in exposure to credit risk between the parties. In these cases, the operator transfers money between the transacting party and the operator or between the transacting parties by the above-described inter-account funds transfer;
(b) Service charges and line charges that the operator receives from transacting parties;
(c) Line charges that the operator receives from various evaluators and/or various providers of reference or proposal data;
(d) Advertisement fees that the operator receives from advertisers;
(e) Agency fees that various agencies receive from end customers;
(f) Evaluation fees that various evaluators receive from end customers;
(g) Information subscription fees that various providers of reference or proposal data receive from end customers and various agencies; and
(h) Payment and receipt of a cash flow that accrues at the point when an event occurs as described above during a transaction period, that is, when a transacting party exercises various rights or fulfills various obligations concerning a financial transaction. Additionally, by choosing to report its event on the menu page, a transacting party notifies the operator that it has exercised its right or has fulfilled its obligation.

Incidentally, if the object products of a financial transaction in the present invention are securities such as bonds, equities or commercial papers, a necessity for executing securities settlement for transferring the actuals after the completion of the transaction arises. Thus, with a view to the securities settlement, the settlement management database 33 in the present invention also stores information such as securities account numbers, securities transfer histories and securities account balances of end customers and various agencies.

If the transacting party chooses to inquire about its securities account on the above-described menu page, the present server 28 accesses the settlement management database 33 and sends its client terminal 27 a securities account confirmation page on which its present securities account balance and securities transfer history are recorded. Additionally, the system operator as well has a securities account of its own and hence a securities account number and uses it for delivery and receipt of securities between the account and the securities accounts of transacting parties.

Deliveries and receipts, between transacting parties, of securities that arise from the completion till the expiry of a financial transaction are executed through inter-account securities transfers in the present system. However, in a financial transaction completed by the auction mode, the system operator becomes the assignee if a transacting party is an assignor, and the assignor if a transacting party is an assignee. On the other hand, in a financial transaction completed by the negotiation mode, one transacting party is an assignor, while the other is an assignee and thus the operator does not intermediate directly. Additionally, object securities of inter-account securities transfers may be immobilized securities or dematerialized securities.

At the stage where signing on a financial transaction agreement is finalized, via the support terminal 29, the present server 28 sends a client terminal 27 of the transacting party a securities settlement notice that notifies it that the inter-account securities transfer will be executed. The individual name and/or corporate name of the transacting party, securities account number, identifier of the financial transaction agreement, volume of securities to be transferred, execution date of the securities settlement, and the like are indicated on the securities settlement notice. Then, the transacting party notifies the present server 28 that it has confirmed the securities settlement information.

Next, in accordance with the securities settlement information, the present server 28 executes the inter-account securities transfer for transferring the predetermined volume of the securities from the securities account of one transacting party to the securities account of the other transacting party. Then, the server 28 updates the information such as securities account balances and securities transfer histories of both the parties stored in the settlement management database 33 to reflect the transfer of securities.

Incidentally, during a transaction period, the operator may charge a transacting party an additional margin or refund an excess margin to the party. If securities are used instead of this margin, the present server 28 transfers the object securities between the transacting party and the operator or between the transacting parties by the above-mentioned inter-account securities transfer.

Now, in the present system, distribution and receipt of various materials are executed as described below:

First, using a form such as a text or an electronic document format, providers of capital management reference data, providers of capital raising proposal data or providers of capital transaction proposal data send the present server 28 their reference or proposal data that they have prepared, capital management evaluators, capital raising evaluators or capital transaction evaluators send the server 28 their self-introduction materials containing their profiles and evaluation fee scales, and capital management agencies, capital raising agencies, secondary offering agencies or capital transaction agencies send the server 28 their self-introduction materials containing their profiles and agency fee scales. Next, upon receiving these data or materials, the present server 28 sequentially stores them in the data distribution database 34 together with the dates and times of receipt.

Then, the present server 28 searches the client information database 30, compares the types and attributes of data, stored in the database, that each prospective transactor desires to receive with those of the data that the server 28 has actually received, and specifies target prospective transactors to whom it distributes the data at this time. Based on the results of this search, using a form such as a text or an electronic document format, it simultaneously distributes these data to the client terminals 27 of the pertinent prospective transactors. Then, if the prospective transactors have received capital management reference data, capital raising proposal data or capital transaction proposal data, they use the data as factors in evaluating various financial transactions, if they have received self-introduction materials of capital management evaluators, capital raising evaluators or capital transaction evaluators, they use the materials as factors in selecting their evaluators, and if they are end customers and have received self-introduction materials of capital management agencies, capital raising agencies, secondary offering agencies or capital transaction agencies, they use the materials as factors in selecting their agencies.

Also, a prospective transactor can peruse at any time various data stored in the data distribution database 34 by choosing to peruse distributed data on said menu page.

Since the data distribution database 34 also stores information on the ownership structure and the human resources of providers of reference or proposal data, evaluators and agencies, end customers can at any time confirm interests existing between parties that they desire to utilize, i.e. statuses of conflicts of interest existing between a provider of reference or proposal data and an agency, between an evaluator and an agency, and/or between the like.

Additionally, communication and exchange of various data between an end customer and an agency, between an end customer and an evaluator, between an end customer and a provider of reference or proposal data, between an agency and an evaluator, and/or between an agency and a provider of reference or proposal data, is executed by utilizing an e-mail function that each client terminal 27 is equipped with, by utilizing a hypertext link between the present site 26 and a web site that each party may build separately from the present site 26, or by the like.

The present server 28 accesses the financial instrument database 31 and the data distribution database 34 in a predetermined cycle and sequentially executes accumulation and statistical processing of various data stored therein, and the system users can peruse the data from their client terminals 27.

If a user chooses to view market information on the above-described menu page, the present server 28 processes market statuses of various financial instruments that have been subjected to accumulation and statistical processing, i.e. their contractual values, indicative values, theoretical values and fixed terms of capital raising arrangements or secondary offering arrangements, as well as details and provisional terms of instruments currently under bidding, bidding statuses of prospective transactors, and outlines of instruments scheduled to be exhibited afterwards, into lists and/or graphs to prepare market information for market conditions pages, and sends the pages to the user.

Such information allows prospective transactors to grasp market levels and balance of supply and demand of various financial transactions, and enables providers of reference or proposal data to appropriately distribute various data that they prepare with respect to financial transactions, and various evaluators and various agencies to appropriately distribute their self-introduction materials.

Additionally, said indicative values of various financial instruments refer to numerical values that have been stored in order lists on the financial instrument database 31 but haven't been matched, or to numerical values that have been collected from providers of reference or proposal data and have been stored in the data distribution database 34. Also, said theoretical values of various financial instruments refer to numerical values that the system operator has rationally calculated excluding arbitrariness and has stored in the data distribution database 34 as one of the providers of reference or proposal data, or to numerical values that have been collected from other providers of reference or proposal data and have been stored in the data distribution database 34.

Besides the configuration in which the present server 28 and the client terminals 27 are connected via the Internet 25, there are a configuration in which they are connected via a computer network that utilizes a dedicated communications line, a configuration in which they are connected via a computer network that utilizes other communications lines, a configuration in which they are connected via a computer network on which wireless communications can be performed, and/or the like.

In addition, the present server 28 and the client terminals 27 may be configured so that the server 28 and broadcast receiving terminals of the users transmit and receive information via a broadcast network of a wireless broadcast or a wired broadcast, whereby they can utilize the present system. For example, data prepared in the present server 28 is converted to data for broadcast in a predetermined broadcast server, is transmitted via electric waves or a communications line to broadcast receiving terminals equipped with predetermined tuners, and is decoded in the tuners, whereby the users can utilize the data. Also, the users can transmit data that they desire to transmit, via the electric waves or the communications line from the broadcast receiving terminals, to the present server 28 through the broadcast server or directly.

Moreover, in the present invention, the present server 28 and the like may be configured by distributing storage media storing a program for executing the above-described operations such as a magneto-optical disc, a digital versatile disc read-only memory, a compact disc read-only memory or a flexible disk cartridge, and then installing the program in a computer.

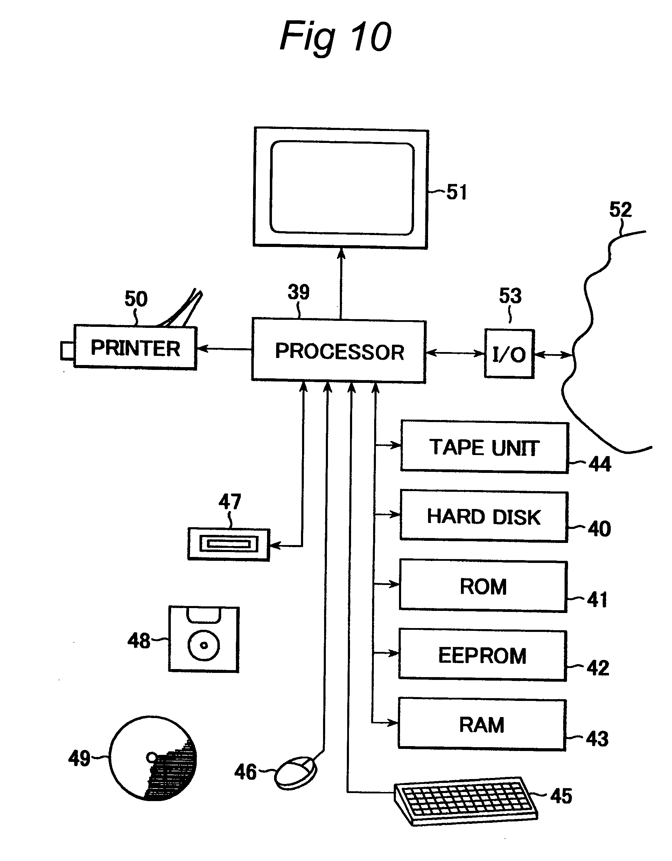

Now, the disintermediated financial transaction server 28, the client terminals 27 and the support terminal 29 of FIG. 9 can be implemented in any way known to persons skilled in the art. One such example is given in FIG. 10.

The arrangement of FIG. 10 comprises a processor 39 for carrying out arithmetic operations. The processor 39 is connected to a plurality of memory components including a hard disk 40, read only memory (ROM) 41, electrically erasable and programmable read only memory (EEPROM) 42 and random access memory (RAM) 43 as well as a tape unit 44. Not all of these memory types need necessarily be provided. Additionally, these memory components need not be located physically close to the processor 39, but may be located remote from the processor 39.

Also, the processor 39 is connected to means for inputting instructions, data and the like, by a user, like a keyboard 45 and a mouse 46. Other input means such as a touch screen, a track ball and/or a voice converter, known to persons skilled in the art, may also be provided.

Moreover, a reading unit 47 connected to the processor 39 is provided. The reading unit 47 is arranged to read out data from and possibly write data to a data carrier like a flexible disk cartridge 48 or a compact disc read-only memory 49. Other data carriers may be tapes, digital versatile discs and the like as is known to persons skilled in the art.

Furthermore, the processor 39 is connected to a printer 50 for printing output data on paper as well as to a display 51, for instance, a monitor or liquid crystal display screen, or any other type of display known to persons skilled in the art.

Besides, the processor 39 may be connected to a communication network 52, for instance, a public switched telephone network (PSTN), a local area network (LAN), a wide area network (WAN), the Internet, etc. by means of I/O means 53. The processor 39 may be arranged to communicate with other communication arrangements through the network 52.

Incidentally, the processor 39 may be implemented as a stand alone system, or as a plurality of parallel operating processors, each arranged to carry out subtasks of a larger computer program, or as one or more main processors with several subprocessors. Parts of the functionality of the present invention may even be carried out by remote processors communicating with the processor 39 through the network 52.

### Advantages of the Invention

Now, advantages that the present invention brings about, itemized and listed by subject, will be described in the following:
1-1. According to the invention, since the intermediation of financial transactions by banks is eliminated, an increase of yields on investment and/or a decrease of funding costs can be realized. That is, in a conventional structure in which end capital managers supply funds to banks through deposits, savings, purchase of bank debentures, and the like and then the banks supply the funds to end capital raisers through lending the funds to the end capital raisers, purchasing securities issued by the end capital raisers, and the like, because the banks take their margins during the flow of the funds, the end capital managers suffer a decrease of yields on investment and/or the end capital raisers suffer an increase of funding costs. In the invention, since funds are supplied from end capital managers to end capital raisers, the margins of any intermediating banks are eliminated and thus the end capital managers can enjoy higher yields on investment and/or the end capital raisers can attain lower funding costs.
1-2. According to the present invention, an increase of yields on investment and/or a decrease of funding costs can be realized even when interest rates have changed. That is, in a situation in which interest rates have risen, interest rates on deposits, savings and bank debentures do not increase to the same degree as those of loans provided for end capital raisers by banks that wish to enlarge their margins, and thus disadvantage end capital managers. On the other hand, in a situation in which interest rates have fallen, interest rates on borrowings do not decrease to the same degree as those of deposits, savings, or bank debentures tapped by banks that wish to enlarge their margins, and thus disadvantage end capital raisers. In the invention, since funds are supplied from end capital managers to end capital raisers, the end capital managers can enjoy higher yields on investment in the situation in which interest rates have risen, and/or the end capital raisers can attain lower funding costs in the situation in which interest rates have fallen.
1-3. According to the present invention, mechanisms for determining interest rates can be corrected. That is, although interest rates of deposits and savings should be differentiated according to the degree of credit risks in individual banks that keep the funds, there have conventionally been negligible differences due to high peer pressure among the banks, and thus end capital managers have also had to endure low interest rates that do not correspond to the credit risks in particular banks. On the other hand, although loan interest rates that banks apply to end capital raisers are determined in principle by adding some percent to funding rates of the banks themselves, there have conventionally been negligible differences due to uniform methods of setting interest rates on the basis of prime rates or the like and high peer pressure among the banks, and thus end capital raisers have had to endure high interest rates that do not correspond to their own creditworthiness. In the invention, since funds are supplied from end capital managers to end capital raisers, interest rates corresponding to the creditworthiness of the end capital raisers are determined based on a balance of supply and demand in the markets, and thus the end capital managers and the end capital raisers can enjoy interest rate levels that both the parties can accept.
1-4. According to the present invention, end capital managers are released from dual credit risks. That is, in a conventional structure in which end capital managers supply funds to banks through deposits, savings, purchase of bank debentures or the like and then the banks supply the funds to end capital raisers through lending the funds to the end capital raisers, purchasing bonds, commercial papers or the like issued by the end capital raisers, or the like, the end capital managers are exposed to dual credit risks. One is a credit risk in the banks for which the end capital managers directly supply the funds, and the other is a credit risk in the end capital raisers for which the end capital managers indirectly supply the funds through the banks. In the invention, since funds are supplied from end capital managers to end capital raisers, the end capital managers are released from the credit risks in intermediating banks.
2-1. According to the present invention, conflicts of interests can be solved. That is, securities companies and banks conduct both brokerage business for end capital managers (with the object of gaining brokerage fees) and proprietary trading business by use of proprietary funds (with the object of gaining trading profits). Therefore, a conflict of interests structure in which a securities company or a bank, in order to gain a large trading profit by use of its proprietary funds, causes an end capital manager to trade with it as its counterparty even under disadvantageous conditions, or completes trading by use of its proprietary funds on a front-running basis on the assumption that an end capital manager would read capital management reference data provided by it and then would perform trading, has been conventionally recognized. In the invention, since an end capital manager trades financial instruments not through a securities company or a bank but with other end capital managers, the end capital manager is freed from this conflict of interests and thus can enjoy higher yields on investment.
2-2. Regarding transactions of foreign exchange products and financial derivative products, banks and securities companies conduct both brokerage or intermediation business for end capital transactors (with the object of gaining brokerage or intermediation fees) and proprietary transaction business by use of proprietary funds (with the object of gaining transaction profits). Therefore, a conflict of interests structure in which a bank or a securities company, in order to gain a large transaction profit by use of its proprietary funds, causes an end capital transactor to transact with it as its counterparty even under disadvantageous conditions, or completes a transaction by use of its proprietary funds on a front-running basis on the assumption that an end capital transactor would read capital transaction proposal data provided by it and then would perform a transaction, has been conventionally recognized. In the invention, since an end capital transactor transacts foreign exchange products and financial derivative products not through a bank or a securities company but with other end capital transactors, the end capital transactor is freed from this conflict of interests and thus can attain more transaction profits and/or more advantageous contract conditions.
2-3. Since a securities company and bank conventionally trades with both an end capital manager and an end capital raiser, occasionally, depending on its business strategy, one of them is treated advantageously and the other is treated disadvantageously. For example, in the case of a business strategy that attaches importance to end capital raisers, an end capital manager having poor capital management skills is sometimes urged to supply its funds to an end capital raiser so that the end capital raiser can attain a lower funding cost. On the other hand, in the case of a business strategy that attaches importance to end capital managers, an end capital raiser having poor capital raising skills is sometimes urged to raise funds targeting an end capital manager so that the end capital manager can attain a higher yield on investment. In the invention, since levels of capital raising are determined based on a balance of supply and demand between end capital managers and end capital raisers, neither side gains an advantage or suffers a disadvantage.
3-1. According to the present invention, fees payable to intermediaries can be eliminated. That is, in a conventional structure in which an end capital raiser issues equities, bonds, commercial papers or the like through a securities company or bank, since the intermediating securities company or bank collects underwriting and selling fees, the end capital raiser suffers an increase of funding costs. In the invention, since funds are supplied from end capital managers to end capital raisers, underwriting and selling fees payable to intermediating securities companies or banks are eliminated, and thus the end capital raisers can attain lower funding costs.
   Also, in a conventional structure in which an end capital manager trades equities, bonds, commercial papers or the like through a securities company or bank, since the intermediating securities company or bank collects brokerage fees, or the securities company or bank virtually collects equivalents of brokerage fees through its proprietary trading with the end capital manager, the end capital manager suffers a decrease of yields on investment. In the invention, since end capital managers trade financial instruments with other end capital managers, brokerage fees payable directly or indirectly to intermediating securities companies or banks are eliminated, and thus the end capital managers can enjoy higher yields on investment.
3-2. Said elimination of fees contributes to an increase of transaction profits and/or the improvement of contract conditions for end capital transactors. That is, in a conventional structure in which an end capital transactor transacts foreign exchange products or financial derivative products through a bank or securities company, since the intermediating bank or securities company collects brokerage or intermediation fees, or the bank or securities company virtually collects equivalents of brokerage or intermediation fees through its proprietary transactions with the end capital transactor, in some cases, the end capital transactor has no choice but to receive reduced transaction profits or to conclude disadvantageous transaction contracts. Above all, since end capital transactors find it hard to grasp market levels of financial derivative products that are transacted as hybrid products on an over-the-counter basis, cases in which banks or securities companies having concluded advantageous contracts with end capital transactors subsequently made undue profits in the inter-financial institution markets, have been known. In the invention, since end capital transactors transact foreign exchange products and financial derivative products with other end capital transactors, brokerage or intermediation fees payable directly or indirectly to intermediating banks or securities companies are eliminated, and thus the end capital transactors can attain more transaction profits and/or more advantageous contract conditions.
4-1. According to the present invention, new access to individual products can be realized. That is, individual end capital managers can fully participate in interest rate products. Since most interest rate products for individual end capital managers have conventionally been deposits and savings, the individual end capital managers have had little knowledge of credit risks that all interest rate products essentially have, and of bonds the prices of which affect yields on investment. Although debenture-issuing banks as well as non-financial entities exemplify domestic capital raisers that use bond issuance, these capital raisers have discriminated in yields between bonds targeting institutions equipped with sufficient knowledge thereof and bonds targeting individual end capital managers, and thus the individual end capital managers equipped with insufficient knowledge and information on the interest rate markets have been disadvantaged in many cases. Also, individual end capital managers have a strong tendency to hold these bonds until maturity as alternatives to time deposits and, in many cases, have suffered opportunity costs as a result of not selling them before maturity despite rises of the markets. Furthermore, in a financial structure in which individuals have only indirectly participated in lending and commercial paper investments through intermediating banks, they have found it virtually impossible to include these instruments in their capital management portfolios. In the invention, by being provided with capital management agencies and/or capital management evaluators who have a great store of knowledge and information on interest rate products, individual end capital managers can make major investments in bonds and include in their portfolios loan assets and commercial papers that can also be regarded as types of bonds, and furthermore, lending itself.
4-2. Individual end capital transactors can fully participate in foreign exchange transactions and financial derivative transactions. That is, since most financial instruments for individual end capital managers have conventionally been deposits, savings and equities while most financial instruments for individual end capital raisers have conventionally been borrowings, individual end capital transactors, which function as both, have had insufficient knowledge and information on foreign exchange products and financial derivative products, and thus have suffered opportunity costs as a result. In the invention, by being provided with capital transaction agencies and/or capital transaction evaluators who have a great store of knowledge and information on foreign exchange products or financial derivative products, individuals can have a wider choice of financial instruments as the objects of their transactions, and thus can attain higher yields on investment and/or lower fund costs. In addition to simple trading, foreign exchange products and financial derivative products are instrumental in hedge transactions and arbitrage transactions, and thus individuals can enjoy profits in various ways by combining the hedge or arbitrage transactions with capital management products that they are currently holding or with capital raising products that they are currently servicing.
4-3. Capital management opportunities in secondary markets for loan assets can be provided. That is, if general capital managers execute loans to end capital raisers, repayment of the loan amounts do not normally end until maturity, and yet the capital managers may find it necessary to sell the loan assets before maturity for reasons of business strategy, cash flows and the like. Since end capital raisers with relatively low creditworthiness have a strong tendency to borrow funds not by bond issuance requiring credit ratings but by loans, once the loan assets are equipped with prices and yields in secondary markets before maturity like those of bonds, the loan assets start afresh as financial instruments attractive to end capital managers as well. The invention provides end capital managers with secondary markets for loan assets in which they can enjoy higher yields on investment for the same credit risks.
4-4. The issuance of private equities can be stimulated. That is, partly because private companies, compared with publicly-held companies, disclose insufficient information thereon, their methods of raising funds have inclined toward bank loans and the like and thus their capital raising by equity issuance has been limited to arrangements targeting relevant connections or to the like. In the invention, since providers of reference or proposal data and/or the present system operator displays theoretical prices of private equities, and capital raising agencies, capital raising evaluators, capital management agencies and/or capital management evaluators provide a great store of useful knowledge and information on private equities, the demands of end capital raisers and end capital managers can be cultivated and thus the inactive markets can be stimulated.
5-1. The present invention enables a financial transaction system that provides transparency for the markets. Namely, transparency can be provided for over-the-counter transactions in the secondary markets. Securities exchanges in several countries are easing their surrender requirements for the transactions on equities and subsequently are preparing environments in which capital managers can perform transactions on an over-the-counter basis beyond the barriers of national borders and the confinement of session hours. On the other hand, loan assets, bonds, commercial papers and the like have been conventionally traded mainly on an over-the-counter basis, and thus have been rarely traded in securities exchanges. If the over-the-counter transactions in the secondary markets continue to increase, however, transparency of the markets decreases and thus the phenomenon of 'many prices for a single product,' in which contract prices or contract yields differ between market A and market B even at the same point in time, occurs and disadvantages some end capital managers. Also, the phenomenon of 'many prices for a single product' at the same point in time generates inconvenience in some instances such as when capital management products being held are marked to market. Since the invention can concentrate domestic and overseas transactions in the system and cover the transactions 24 hours a day, it can easily display current market levels and transaction volumes of various capital management products showing their current status, and thus can provide transparency for the secondary markets.
5-2. Transparency can be provided for over-the-counter transactions of capital transaction products. That is, regarding foreign exchange products and financial derivative products, as their structures get more complicated, demands for over-the-counter transactions that are instrumental in creating tailor-made products increase, and thus the over-the-counter transactions have conventionally been more prominent. If the over-the-counter transactions continue to increase, however, transparency of the markets decreases and thus the phenomenon of 'many prices for a single product,' in which contract prices, contract interest rates, contract yields, contract yield spreads or contract exchange rates differ between market A and market B even at the same point in time, occurs and disadvantages some end capital transactors. Also, the phenomenon of 'many prices for a single product' at the same point in time generates inconvenience in some instances such as when capital transaction products being carried are marked to market. Since the invention can concentrate domestic and overseas transactions in the system and cover the transactions 24 hours a day, it can easily display current market levels and transaction volumes of capital transaction products showing their current status, and thus can provide transparency for the markets.
6-1. According to the present invention, liquidity can be provided for the markets. That is, the trading of illiquid securities can be stimulated. In practice, bonds and commercial papers issued by various non-financial entities and equities issued by small-to-medium-sized companies and private companies show low liquidity, and thus end capital managers find it difficult to actively trade them in the secondary markets. This is partly because these securities have offered insufficient profit-making opportunities to securities companies or banks that act as intermediaries in such trading, and thus the intermediaries have failed to make adequate efforts to seek out end capital managers willing to buy and end capital managers willing to sell such securities. In the invention, since providers of reference or proposal data and/or the system operator displays theoretical prices and theoretical yields of illiquid securities, and capital management agencies or capital management evaluators provide a great store of useful knowledge and information on illiquid securities, the demands of end capital managers willing to buy and end capital managers willing to sell such securities can be cultivated and thus liquidity can be provided for the inactive trading markets.
6-2. The transactions of illiquid foreign exchange transactions and financial derivative transactions can be stimulated. That is, capital transaction products transacted on an over-the-counter basis have a strong tendency to show low liquidity, and thus end capital transactors find it difficult to actively trade them in the secondary markets. This is partly because securing end capital transactors who can act as counterparties for the products proves difficult since particular conditions such as amounts, contract periods and various exercisable rights required by the relevant capital transactors are reflected in the designs of the products. In the invention, since the system operator or others execute, as appropriate, processing of bundling standardized products to create a tailor-made product and processing of unbundling a tailor-made product to restore the standardized products, the demands of end capital transactors willing to create a short position and end capital transactors willing to create a long position can be matched more easily and thus liquidity can be provided for the inactive capital transaction products.
7-1. The present invention can provide neutrality for capital raising-related information. That is, a stance in which securities companies and banks provide information related to capital raising for end capital raisers and end capital managers in order to win a lead-management role in underwriting and selling business or to gain higher shares in underwriting and selling syndicates, has been conventionally recognized. This stance, however, in which the securities companies and the banks pursue their own showings excessively, makes it difficult for end capital raisers to perform their optimum capital raising and for end capital managers to perform their optimum capital management. Since providers of capital raising proposal data and providers of capital management reference data in accordance with the invention respectively supply the capital raising-related information from the viewpoints of end capital raisers and end capital managers, the end capital raisers and the end capital managers can optimize their capital raising and capital management respectively.
7-2. Neutrality can be provided for capital management-related information. That is, a stance in which securities companies and banks, in order to increase brokerage fees, which are sources of their income, provide capital management reference data for end capital managers so that the end capital managers trade financial instruments more frequently, has been conventionally recognized, and yet the stance makes it difficult for the end capital managers to perform their optimum capital management. Since providers of capital management reference data in accordance with invention supply the information from the viewpoint of end capital managers, they do not prompt the end capital managers to buy or sell capital management products in market environments where making profits through the trades is difficult.
7-3. Neutrality can be provided for capital transaction-related information. That is, a stance in which banks and securities companies, in order to increase brokerage or intermediation fees, which are sources of their income, provide capital transaction proposal data for end capital transactors so that the end capital transactors transact foreign exchange products or financial derivative products more frequently, has been conventionally recognized, and yet with such a stance, the end capital transactors cannot necessarily optimize their capital transactions. Since providers of capital transaction proposal data in accordance with the invention supply the information from the viewpoint of end capital transactors, they do not prompt the end capital transactors to trade or to conclude contracts in market environments where making profits through the capital transactions is difficult.
8-1. A stance in which securities companies and banks provide capital raising-related advice for end capital raisers in order to win a lead-management role in underwriting and selling business or to gain higher shares in underwriting and selling syndicates, has been conventionally recognized. This stance, however, in which the securities companies and the banks excessively pursue their own showings as well as underwriting and selling fees, makes it difficult to raise funds in sound markets. Also, since end capital raisers have insufficient knowledge and information on financial markets, in some cases, they have implicitly believed the advice of securities companies or banks and raised funds, and have been disadvantaged as a result. Since capital raising agencies in accordance with the invention execute capital raising purely from the viewpoint of end capital raisers, the agencies can optimize the methods and timings of transactions and decrease the funding costs of the end capital raisers as a result.
8-2. A structure in which end capital managers entrust their funds to fiduciaries such as trust accounts with trust banks, investment management companies and investment trust management companies and then have the fiduciaries manage the funds, has been commonly known. The fiduciaries, however, have a strong tendency to be subsidiaries, affiliated companies or associated companies of securities companies or banks, and thus a market custom in which they are forced to purchase, directly or indirectly, securities handled by the securities companies or the banks engaged in underwriting and selling business or brokerage business, has been conventionally recognized. Since capital management agencies in accordance with the invention directly purchase securities issued by end capital raisers, not through securities companies or banks, they are freed from the conflict of interests arising between end capital managers and the securities companies or banks, and thus enable the capital management purely in line with the viewpoint of the end capital managers.
8-3. Since end capital transactors have insufficient knowledge and information on foreign exchange markets and financial derivative markets, in many cases, they have implicitly believed the advice of securities companies or banks and performed transactions, and have been disadvantaged as a result. Since capital transaction agencies in accordance with the invention execute capital transactions purely from the viewpoint of end capital transactors, the agencies can optimize the choices of products, methods and timings of transactions and the like, and thus bring the end capital transactors more transaction profits or more advantageous contract conditions.
9-1. An entity that comprehensively evaluates capital raising performed by end capital raisers has not existed previously. Capital raising evaluators in accordance with the invention recommend to end capital raisers, capital raising agencies that are suited to their capital raising policies, compare the contents of the advice given by the capital raising agencies, the performance of capital raising conducted by the capital raising agencies commissioned, or that of capital raising independently conducted by the end capital raisers, with that of capital raising conducted by other end capital raisers or other capital raising agencies, that of market indices, or the like, and then report the resulting evaluations to the end capital raisers on a real time basis. The end capital raisers can attain lower funding costs by commissioning the recommended capital raising agencies to raise their funds or by applying the given evaluations to their future capital raising.
9-2. Although a structure in which pension consultants and the like give advice to investors, has been commonly known, the provision of the advice has mainly targeted institutional investors and has not been a real-time service. Capital management evaluators in accordance with the invention recommend to end capital managers, whether they are individuals or entities, capital management agencies that are suited to their capital management policies, compare the contents of the advice given by the capital management agencies, the performance of capital management conducted by the capital management agencies commissioned, or that of capital management independently conducted by the end capital managers, with that of capital management conducted by other end capital managers or other capital management agencies, that of market indices, or the like, and then report the resulting evaluations to the end capital managers on a real time basis. The end capital managers can realize higher yields on investment by commissioning the recommended capital management agencies to manage their funds or by applying the given evaluations to their future capital management.
9-3. An entity that comprehensively evaluates transactions of foreign exchange products or financial derivative products performed by end capital transactors has not existed previously. Capital transaction evaluators in accordance with the invention recommend to end capital transactors, capital transaction agencies that are suited to their capital transaction policies, compare the contents of the advice given by the capital transaction agencies, the performance of capital transactions conducted by the capital transaction agencies commissioned, or that of capital transactions independently conducted by the end capital transactors, with that of capital transactions conducted by other end capital transactors or other capital transaction agencies, that of market indices, or the like, and then report the resulting evaluations to the end capital transactors on a real time basis. The end capital transactors can attain more transaction profits, more advantageous contract conditions or more effective hedge transactions by commissioning the recommended capital transaction agencies to perform transactions or by applying the given evaluations to their future capital transactions.
10-1. The present invention allows simultaneous collective financial transactions. That is, regarding the conventional issuance of equities, bonds, commercial papers and the like, it has been difficult for many end capital raisers to perform capital raising simultaneously since securities companies and banks that conduct underwriting and selling business have limited capacities for execution. Therefore, in many cases, end capital raisers who had postponed their capital raising were disadvantaged by the subsequent falls of the markets, while capital managers who had failed to participate in capital raising missed the optimal timings as a result of the subsequent rises of the markets. In the invention, since end capital raisers are supplied with funds by end capital managers, not through securities companies or banks, and since simultaneous collective capital raising by a plurality of end capital raisers with similar current credit risks and similar outlooks for future credit risks and/or by a plurality of end capital raisers with similar current levels of equity prices and similar outlooks for future levels of equity prices can be performed, more end capital raisers and more end capital managers can participate in the markets simultaneously.
10-2. Although simultaneous collective loans by a plurality of capital managers have been executed domestically and overseas in the form of underwriting syndications consisting of banks and securities companies, this has been nothing more than a style that enabled financial institutions invited by an end capital raiser or a lead manager of an underwriting syndicate to participate in a single arrangement. Also, simultaneous collective buying of newly issued bonds, equities or commercial papers has been nothing more than a form that resulted in simultaneous collective buying of a single issue performed by capital managers after underwriting and selling syndicates consisting of banks and securities companies completed their placements. Meanwhile, there has been negligible communication among capital managers in the conventional capital management (including secondary offerings) in the secondary markets, and thus there has been no simultaneous collective capital management (including simultaneous collective secondary offerings) performed by a plurality of capital managers except that of a plurality of staff members within a single capital manager or that of a plurality of selling holders in a single name of issue.
   In the invention, end capital managers and capital management agencies can improve yields on investment by keeping step with partners in simultaneous collective capital management, i.e. other end capital managers and other capital management agencies with compatible capital management policies and objectives and thus by increasing the managed amounts. On the other hand, if the amounts managed by the side of end capital managers increase through simultaneous collective capital management, end capital raisers can raise larger amounts with lower frequency and thus avoid missing the optimal timings in the markets and then resulting in higher funding costs.
10-3. There has been negligible communication among capital transactors in the conventional transactions of foreign exchange products and financial derivative products, and thus there has been no simultaneous collective capital transaction performed by a plurality of capital transactors except that of a plurality of staff members within a single capital transactor. In the invention, end capital transactors and capital transaction agencies can attain more transaction profits or more advantageous contract conditions by keeping step with partners in simultaneous collective capital transactions, i.e. other end capital transactors and other capital transaction agencies with compatible capital transaction policies and objectives and thus by increasing the transacted amounts.

The computer system for supporting disintermediated financial transactions between end customers in accordance with the present invention comprises at least one computer equipped to function as a web server and a database server, a plurality of user terminals of said end customers, at least one computer network connecting said computer and said user terminals, one or more financial instrument databases, and any one or more other databases selected from the group consisting of a contract management database, a settlement management database, a data distribution database and a client information database, and is arranged to enable at least one of an auction mode and a negotiation mode.

## Claims

1. A computer system for supporting disintermediated financial transactions between end customers selected from the group consisting of end capital managers, end capital raisers and end capital transactors, wherein the system comprises:
(a) at least one computer equipped to function as a web server and a database server;
(b) a plurality of user terminals of said end customers;
(c) at least one computer network connecting said computer and said user terminals;
(d) one or more financial instrument databases storing data regarding financial transactions selected from the group consisting of capital raising, capital management, secondary offerings and capital transactions; and
(e) any one or more other databases selected from the group consisting of:
(i) one or more contract management databases storing data regarding at least one of financial transaction agreements, prospectuses, reports and disclosures;
(ii) one or more settlement management databases storing data regarding at least one of funds settlement and securities settlement;
(iii) one or more data distribution databases storing at least one of capital management reference data, capital raising proposal data and capital transaction proposal data; and
(iv) one or more client information databases storing data regarding users of said system, and
the system is arranged to enable at least one of an auction mode and a negotiation mode,
the auction mode for directly matching according to the principle of balance of supply and demand, financial transaction orders selected from the group consisting of capital raising orders, capital management orders, secondary offering orders and capital transaction orders, and
the negotiation mode for providing communication channels between said end customers so that the end customers can directly negotiate with one another to complete said financial transactions.

2. The disintermediated financial transaction system according to claim 1, wherein said financial transaction is capital raising, the system further comprising:
(a) first transmission means by which a terminal of a prospective capital raiser sends said computer a capital raising order;
(b) first receiving means by which the computer receives the capital raising order sent from the terminal of the prospective capital raiser by the first transmission means;
(c) first storage means by which the computer stores the capital raising order received by the first receiving means;
(d) disclosure means by which the computer discloses said capital raising order to terminals of specified or unspecified potential capital managers;
(e) second transmission means by which one or more of the terminals of the potential capital managers send the computer their capital management orders targeting the prospective capital raising based on the capital raising order disclosed by the computer with said disclosure means;
(f) second receiving means by which the computer receives the capital management orders sent from the terminals of the potential capital managers by the second transmission means;
(g) second storage means by which the computer stores the capital management orders received by the second receiving means;
(h) matching means by which the computer compares the capital raising order and the capital management orders respectively stored by the first and the second storage means to determine whether or not their conditions match;
(i) updating means by which, if the computer determines with said matching means that their conditions match, the computer completes the capital raising between the capital raising order and the capital management orders and updates the capital raising order and the capital management orders respectively stored by the first and the second storage means; and
(j) notifying means by which the computer notifies the terminal of the prospective capital raiser and the terminals of the potential capital managers of the respective transaction results brought about by said matching means.

3. The disintermediated financial transaction system according to claim 1, wherein said financial transaction is capital management, the system further comprising:
(a) transmission means by which two or more of the user terminals send said computer buying orders and selling orders of a capital management product;
(b) receiving means by which the computer receives the buying orders and the selling orders sent from the user terminals by said transmission means;
(c) storage means by which the computer stores the buying orders and the selling orders received by said receiving means;
(d) matching means by which the computer compares the buying orders and the selling orders stored by said storage means to determine whether or not their conditions match;
(e) updating means by which, if the computer determines with said matching means that their conditions match, the computer completes transactions between the buying orders and the selling orders and updates the respective orders stored by said storage means; and
(f) notifying means by which the computer notifies the user terminals of the respective transaction results brought about by said matching means.

4. The disintermediated financial transaction system according to claim 1, wherein said financial transaction is a secondary offering, the system further comprising:
(a) first transmission means by which a terminal of a prospective selling holder sends said computer a secondary offering order of a capital management product;
(b) first receiving means by which the computer receives the secondary offering order sent from the terminal of the prospective selling holder by the first transmission means;
(c) first storage means by which the computer stores the secondary offering order received by the first receiving means;
(d) disclosure means by which the computer discloses said secondary offering order to terminals of specified or unspecified potential purchasers;
(e) second transmission means by which one or more of the terminals of the potential purchasers send the computer their purchase orders targeting the prospective secondary offering based on the secondary offering order disclosed by the computer with said disclosure means;
(f) second receiving means by which the computer receives the purchase orders sent from the terminals of the potential purchasers by the second transmission means;
(g) second storage means by which the computer stores the purchase orders received by the second receiving means;
(h) matching means by which the computer compares the secondary offering order and the purchase orders respectively stored by the first and the second storage means to determine whether or not their conditions match;
(i) updating means by which, if the computer determines with said matching means that their conditions match, the computer completes the secondary offering between the secondary offering order and the purchase orders and updates the secondary offering order and the purchase orders respectively stored by the first and the second storage means; and
(j) notifying means by which the computer notifies the terminal of the prospective selling holder and the terminals of the potential purchasers of the respective transaction results brought about by said matching means.

5. The disintermediated financial transaction system according to claim 1, wherein said financial transaction is a capital transaction, the system further comprising:
(a) transmission means by which two or more of the user terminals send said computer long position orders and short position orders of a capital transaction product;
(b) receiving means by which the computer receives the long position orders and the short position orders sent from the user terminals by said transmission means;
(c) storage means by which the computer stores the long position orders and the short position orders received by said receiving means;
(d) matching means by which the computer compares the long position orders and the short position orders stored by said storage means to determine whether or not their conditions match;
(e) updating means by which, if the computer determines with said matching means that their conditions match, the computer completes capital transactions between the long position orders and the short position orders and updates the respective orders stored by said storage means; and
(f) notifying means by which the computer notifies the user terminals of the respective transaction results brought about by said matching means.

6. The disintermediated financial transaction system according to claim 1, wherein said financial transaction is a negotiated transaction, the system further comprising:
(a) transmission means by which a terminal of a prospective initiating transactor of a financial instrument sends a request for a negotiated transaction to a terminal of at least one potential negotiation counterparty;
(b) first receiving means by which a terminal of a potential negotiation counterparty receives the request for the negotiated transaction sent from the terminal of the prospective initiating transactor by said transmission means;
(c) returning means by which the terminal of the potential negotiation counterparty returns a decision of acceptance, rejection or negotiation with respect to the request for the negotiated transaction received by the first receiving means, to the terminal of the prospective initiating transactor;
(d) second receiving means by which the terminal of the prospective initiating transactor receives the decision returned from the terminal of the potential negotiation counterparty by said returning means; and
(e) notifying means by which at least one of the terminal of the prospective initiating transactor and the terminal of the potential negotiation counterparty notifies said computer of the result of completion or non-completion of the negotiated transaction.

7. The disintermediated financial transaction system according to claim 6, wherein the system further comprises:
(a) transmission means by which said terminal of said prospective initiating transactor sends said computer a request for a negotiated transaction of a financial instrument;
(b) receiving means by which the computer receives the request for the negotiated transaction sent from the terminal of the prospective initiating transactor by said transmission means;
(c) specifying means by which the computer specifies at least one potential negotiation counterparty who matches the request for the negotiated transaction received by said receiving means; and
(d) notifying means by which the computer notifies the terminal of the prospective initiating transactor of contact information on the potential negotiation counterparty or counterparties specified by said specifying means.

8. The disintermediated financial transaction system according to any one of claims 1, 2, 6 and 7, wherein object products of said financial transactions are any one or more capital raising products selected from the group consisting of borrowings, bonds, equities and commercial papers.

9. The disintermediated financial transaction system according to any one of claims 1, 3, 4, 6 and 7, wherein object products of said financial transactions are any one or more capital management products selected from the group consisting of loan assets, bonds, equities and commercial papers.

10. The disintermediated financial transaction system according to any one of claims 1 and 5 through 7, wherein object products of said financial transactions are any one or more capital transaction products selected from the group consisting of foreign exchange products, interest rate derivative products, equity derivative products, hybrid derivative products, forward products, futures products, option products and swap products.

11. The disintermediated financial transaction system according to any one of claims 1 through 10, wherein any one or more agencies selected from the group consisting of capital management agencies, capital raising agencies, secondary offering agencies and capital transaction agencies can thereby participate in said financial transactions.

12. The disintermediated financial transaction system according to any one of claims 1 through 10, wherein any one or more evaluators selected from the group consisting of capital management evaluators, capital raising evaluators and capital transaction evaluators can thereby participate in said financial transactions.

13. The disintermediated financial transaction system according to any one of claims 1 through 10, wherein any one or more data providers selected from the group consisting of providers of capital management reference data, providers of capital raising proposal data and providers of capital transaction proposal data can thereby participate in said financial transactions.

14. The disintermediated financial transaction system according to any one of claims 1 through 10, wherein said financial instruments can thereby be transacted domestically and abroad 24 hours a day beyond the confines of national borders and session hours.

15. The disintermediated financial transaction system according to any one of claims 1 through 10, wherein settlement and administration functions after completion of a financial transaction selected from the group of functions consisting of transaction confirmation, signing of a contract, assignment of a contract, funds settlement, securities settlement, and inspection of legal and regulatory compliance are thereby concentrated.

16. A financial transaction system, wherein any one or more jobs selected from the group consisting of processing of bundling a plurality of standardized products to create at least one hybrid product, processing of unbundling at least one hybrid product to create a plurality of standardized products, processing of bundling a plurality of hybrid products to create at least one other hybrid product, and processing of unbundling at least one hybrid product to create a plurality of hybrid products, can appropriately be executed with respect to financial instruments.

17. A financial transaction system, wherein any one or more simultaneous collective financial transactions selected from the group consisting of simultaneous collective capital management, simultaneous collective capital raising, simultaneous collective secondary offerings and simultaneous collective capital transactions can thereby be performed.

18. A server for a computer system supporting disintermediated financial transactions between end customers selected from the group consisting of end capital managers, end capital raisers and end capital transactors, wherein the server is equipped to function as a web server and a database server and to communicate with:
(a) a plurality of user terminals of said end customers;
(b) one or more financial instrument databases storing data regarding financial transactions selected from the group consisting of capital raising, capital management, secondary offerings and capital transactions; and
(c) any one or more other databases selected from the group consisting of:
(i) one or more contract management databases storing data regarding at least one of financial transaction agreements, prospectuses, reports and disclosures;
(ii) one or more settlement management databases storing data regarding at least one of funds settlement and securities settlement;
(iii) one or more data distribution databases storing at least one of capital management reference data, capital raising proposal data and capital transaction proposal data; and
(iv) one or more client information databases storing data regarding users of said system, and
said server is arranged to enable at least one of an auction mode and a negotiation mode,
the auction mode for directly matching according to the principle of balance of supply and demand, financial transaction orders selected from the group consisting of capital raising orders, capital management orders, secondary offering orders and capital transaction orders, and
the negotiation mode for providing communication channels between said end customers so that the end customers can directly negotiate with one another to complete said financial transactions.

19. A method for supporting, by a server, disintermediated financial transactions between end customers selected from the group consisting of end capital managers, end capital raisers and end capital transactors over a computer system, wherein the method comprises:
(a) performing web server functions and database server functions;
(b) communicating with a plurality of user terminals of said end customers;
(c) utilizing one or more financial instrument databases storing data regarding financial transactions selected from the group consisting of capital raising, capital management, secondary offerings and capital transactions, and any one or more other databases selected from the group consisting of:
(i) one or more contract management databases storing data regarding at least one of financial transaction agreements, prospectuses, reports and disclosures;
(ii) one or more settlement management databases storing data regarding at least one of funds settlement and securities settlement;
(iii) one or more data distribution databases storing at least one of capital management reference data, capital raising proposal data and capital transaction proposal data; and
(iv) one or more client information databases storing data regarding users of said system; and
(d) providing at least one of an auction mode and a negotiation mode,
the auction mode for directly matching according to the principle of balance of supply and demand, financial transaction orders selected from the group consisting of capital raising orders, capital management orders, secondary offering orders and capital transaction orders, and
the negotiation mode for providing communication channels between said end customers so that the end customers can directly negotiate with one another to complete said financial transactions.

20. A computer program product comprising data and instructions to be loaded by a server and, after being loaded, providing the server with the capacity to perform the method as claimed in claim 19.

21. A computer-readable storage medium storing a computer program product as claimed in claim 20.
